# EUROPEAN PATENT APPLICATION

(11) **EP 4 804 712 A1**
(43) Date of publication of application: **09.09.2026**
(21) Application number: 24893266.7
(22) Date of filing: 08.11.2024
(51) Int. Cl.: H04W 76/10

(54) **COMMUNICATION METHOD, APPARATUS, AND SYSTEM**

(30) Priority: 23.11.2023 CN 202311584842
(71) Applicant: Huawei Technologies Co., Ltd., Shenzhen, Guangdong 518129 (CN)
(72) Inventor: XU, Shengfeng, Shenzhen, Guangdong 518129 (CN); PENG, Wenjie, Shenzhen, Guangdong 518129 (CN); XU, Yishan, Shenzhen, Guangdong 518129 (CN); ZHAO, Yang, Shenzhen, Guangdong 518129 (CN); ZHANG, Wanqiang, Shenzhen, Guangdong 518129 (CN)
(74) Representative: Körber, Martin Hans
(86) International application number: PCT/CN2024/130887
(87) International publication number: WO 2025/108108

(57) **Abstract**

A communication method, apparatus, and system are provided, involving the field of communication technology. The method is used to promptly and reliably determine the transmission parameters corresponding to the transmission manner in scenarios where a terminal and a network side have multiple connections. In this method, the transmission parameters corresponding to the transmission manner of the data of the first session of the terminal are determined based on transmission assistance information of N access network devices, wherein the transmission assistance information of the N access network devices indicates transmission performance of the transmission paths corresponding to the N access network devices. In this method, the transmission manner is a split transmission manner or a path selection transmission manner, wherein the transmission parameters corresponding to the split transmission manner indicate split ratios of the data of the first session on the transmission paths corresponding to the N access network devices, wherein the transmission parameters corresponding to the path selection transmission manner indicate a target transmission path of the data of the first session, and wherein the target transmission path is one of the transmission paths corresponding to the N access network devices.

## Description

### CROSS-REFERENCE TO RELATED APPLICATIONS

This application claims priority to Chinese Patent Application No. 202311584842.1, filed with the China National Intellectual Property Administration on November 23, 2023, and entitled "A Communication Method, Apparatus, and System." The entire content of the priority application is incorporated herein by reference.

### TECHNICAL FIELD

This application relates to the field of wireless communication technologies, and in particular, to a communication method, apparatus, and system.

### BACKGROUND

With the development of communication technologies, future terminals (such as smartphones) may be equipped with dual connectivity functions. In dual connectivity mode, a terminal can simultaneously connect to two access network devices and maintain radio resource control (radio resource control, RRC) connections with both access network devices. The terminal can perform split transmission of data through the transmission paths corresponding to the two access network devices. Alternatively, the terminal may select one of the two transmission paths corresponding to the two access network devices for data transmission.

Factors such as changes in network status may cause the transmission performance of the transmission paths corresponding to different access network devices to change. Therefore, it is necessary to adjust the transmission parameters of service data on the transmission paths corresponding to the different access network devices in a timely and reliable manner, in order to ensure the transmission performance of the service data. For example, in the case of using split transmission, it is necessary to adjust split ratios on the two transmission paths in a timely and reliable manner. In the case of using path selection for transmission, it is necessary to adjust the target transmission path in a timely and reliable manner. Therefore, in a scenario where a terminal and the network side have multiple connections, how to adjust the transmission parameters in a timely and reliable manner, and thereby improve the transmission performance, is a technical problem that currently needs to be resolved.

### SUMMARY

Embodiments of this application provide a communication method, an apparatus, and a system, so as to determine, in a timely and reliable manner, transmission parameters corresponding to a transmission manner in a scenario in which a terminal and a network side have a plurality of connections.

The method in the embodiments of this application may be applied to a communication system that includes the following network elements: an access network device, an access and mobility management function entity, a session management function entity, a user plane function entity, a terminal, and the like. There are N access network devices, and N is an integer greater than 1.

Optionally, the N access network devices include N radio access network (radio access network, RAN) devices. The N access network devices comprise N non-3GPP interworking function (non-3GPP Inter Working Function, N3IWF; wherein 3GPP is an English abbreviation of 3rd Generation Partnership Project and represents the 3rd Generation Partnership Project) devices; or the N access network devices include N trusted non-3GPP gateway function (trusted non-3GPP gateway function, TNGF) devices; or the N access network devices comprise at least one RAN device and at least one N3IWF device; or the N access network devices comprise at least one RAN device and at least one TNGF device; or the N access network devices include at least one N3IWF device and at least one TNGF device.

Optionally, in the foregoing system architecture, the access network device, the session management function entity, the user plane function entity, or the terminal may determine, based on the transmission assistance information of the N access network devices, transmission parameters corresponding to transmission manner of data of a first protocol data unit (protocol data unit, PDU) session of the terminal, for uplink and/or downlink transmission.

Optionally, the transmission manner may be a split transmission manner, and the transmission parameters corresponding to the split transmission manner indicate split ratios on transmission paths corresponding to the N access network devices. Optionally, the transmission manner may be a path selection transmission manner, and the transmission parameters corresponding to the path selection transmission manner indicate a target transmission path. Optionally, the transmission manner may be a redundant transmission manner. Under the redundant transmission manner, data in the first PDU session is transmitted on one transmission path, and the same data is transmitted on at least one other transmission path.

Optionally, the N access network devices include a first access network device, and the transmission assistance information of the first access network device includes one or more of the following information: signalling status information measured by the first access network device, wherein the signalling status information indicates a status of a signal between the first access network device and the terminal; signalling status information received by the first access network device from the terminal, wherein the signalling status information indicates a status of a signal between the first access network device and the terminal; load information of the first access network device; an air interface transmission delay between the first access network device and the terminal; a transmission rate between the first access network device and the terminal; or transmission reliability information between the first access network device and the terminal.

The following describes an embodiment of this application.

According to a first aspect, a communication method is provided. The method comprises: receiving, by a first device, transmission indication information from a session management function entity, wherein the transmission indication information includes first transmission indication information, and wherein the first transmission indication information indicates a transmission manner of data of a first session; and wherein the transmission manner is a split transmission manner or a path selection transmission manner, wherein the first device comprises a terminal and/or a user plane function entity, wherein the session management function entity is configured to manage the first session of the terminal, and wherein the user plane function entity is configured to transmit data of the first session; receiving, by the first device, transmission assistance information from N access network devices, wherein the transmission assistance information of the N access network devices indicates transmission performance of transmission paths corresponding to the N access network devices, and wherein N is a positive integer greater than 1; and wherein the N access network devices are configured to transmit data of the first session. When the first device receives the transmission indication information, the first device determines, based on the transmission assistance information, transmission parameters corresponding to the transmission manner of the data of the first session, wherein the transmission parameters corresponding to the split transmission manner indicate the split ratios of the data of the first session on the transmission paths corresponding to the N access network devices, and wherein the transmission parameters corresponding to the path selection transmission manner indicate the target transmission path of the data of the first session. The target transmission path is one of the transmission paths corresponding to the N access network devices.

Optionally, the N access network devices may periodically send the transmission assistance information, so that the first device can adjust the transmission parameters in time based on the received transmission assistance information, for example, adjust the split ratios of the data of the first session in time on the transmission paths corresponding to the N access network devices. Alternatively, the target transmission path of the data of the first session is adjusted in time, so as to improve transmission decision performance, and further improve transmission performance.

Optionally, the terminal is connected to the user plane function entity by using N access network devices. In other words, the terminal has transmission paths corresponding to the N access network devices. In other words, the transmission paths corresponding to the N access network devices are associated with one session (for example, the first session) of the terminal.

Optionally, the first device is a user plane function entity, and the data of the first session is downlink data. In this case, the transmission manner is used for downlink data transmission of the first session. For example, when the transmission manner is the split transmission manner, it indicates that the data of the first session is split and transmitted on the downlink transmission paths corresponding to the N access network devices. The transmission parameters corresponding to the split transmission manner indicate the split ratios of the data of the first session on the downlink transmission paths corresponding to the N access network devices; and when the transmission manner is the path selection transmission manner, it indicates that the downlink data of the first session is transmitted by using the target downlink transmission path, and the transmission parameters corresponding to the path selection transmission manner indicate the target downlink transmission path of the data of the first session.

Optionally, the first device is a terminal, and the data of the first session is uplink data. In this case, the transmission manner is used for uplink data transmission of the first session. For example, when the transmission manner is the split transmission manner, it indicates that the data of the first session is split and transmitted on the uplink transmission paths corresponding to the N access network devices. The transmission parameters corresponding to the first transmission manner indicate split ratios of the uplink data of the first session on the uplink transmission paths corresponding to the N access network devices; and when the transmission manner is the path selection transmission manner, it indicates that the data of the first session is transmitted by using the target uplink transmission path, and the transmission parameters corresponding to the path selection transmission manner indicate the target uplink transmission path of the data of the first session.

In the foregoing implementation, the user plane function entity determines, based on the transmission assistance information sent by the access network device, the split ratios of the data of the first session on different transmission paths in the split transmission manner, or determines a target transmission path of the data of the first session in the path selection transmission manner. The access network device provides the transmission assistance information for the user plane function entity. Compared with the user plane function entity performing measurement of performance measurement function (performance measurement function, PMF) to obtain transmission performance between the user plane function entity and the terminal, the access network device can reduce a delay and improve reliability. It also improves real-time performance, which can improve decision-making performance.

In a possible implementation, the transmission indication information further includes second transmission indication information, and the second transmission indication information indicates that transmission parameters corresponding to a transmission manner of the data of the first session are determined according to the transmission assistance information of the N access network devices.

In a possible implementation, the first session includes at least one data flow, the at least one data flow includes a first data flow, and the data of the first session includes the first data flow. In other words, the transmission parameters may be transmission parameters at a granularity of a data flow in the first PDU session. For example, if the transmission manner is a split transmission manner, the transmission parameters includes split ratios of the first data flow in the first PDU session on transmission paths corresponding to the first access network device and the second access network device. Optionally, different data flows in the first PDU session may each have their own split ratios, and the split ratios of the different data flows may be different. For another example, if the transmission manner is a path selection transmission manner, the transmission parameters include a target transmission path of the first data flow in the first PDU session. Optionally, different data flows in the first PDU session may each have their own target transmission path, and the target transmission paths of the different data flows may be different. By determining the transmission parameters at a granularity of a data flow in the PDU session, control (or scheduling) precision of data transmission can be improved, and system flexibility can be improved.

In a possible implementation, the method further includes: receiving, by the first device, a split rule from the session management function entity, wherein the split rule indicates a correspondence between transmission assistance information and split ratios; and determining, by the first device, based on the transmission assistance information, transmission parameters corresponding to the transmission manner of the data of the first session, including: determining, by the first device, based on the received transmission assistance information and the split rule, split ratios of the data of the first session on the transmission paths corresponding to the N access network devices; or, receiving, by the first device, a path selection rule from the session management function entity; and determining, by the first device, based on the transmission assistance information, transmission parameters corresponding to a transmission manner of the data of the first session, including: determining, by the first device, based on the received transmission assistance information and the transmission path selection rule, the target transmission path of the data of the first session.

Optionally, the transmission path selection rule indicates how to select a target transmission path based on the transmission assistance information.

In a possible implementation, the determining, by the first device, based on the transmission assistance information, the transmission parameters corresponding to the transmission manner of the data of the first session includes: determining, by the first device, based on the transmission assistance information of the N access network devices and capability information of the terminal, the transmission parameters corresponding to the transmission manner of the data of the first session. The capability information of the terminal indicates air interface transmission capability of the terminal on the N access network devices.

Optionally, the air interface transmission capability may include a multi-antenna capability, a bandwidth capability, a transmit power capability, and the like.

In the foregoing implementation, because the air interface transmission capability of the terminal on the access network device affects transmission performance of a transmission path corresponding to the access network device, the air interface transmission capability of the terminal on the N access network devices is used as a basis for determining the transmission parameters. This can improve reliability of the transmission parameters.

In a possible implementation, the first device is the user plane function entity, and the method further includes: receiving, by the user plane function entity, the capability information of the terminal from the session management function entity.

In a possible implementation, the method further includes: performing, by the user plane function entity, split transmission of the data of the first session on downlink transmission paths corresponding to the N access network devices based on the split ratios indicated by the transmission parameters corresponding to the split transmission manner, or performing transmission of the data of the first session on a target downlink transmission path based on the target downlink transmission path indicated by the transmission parameters corresponding to the path selection transmission manner; or performing, by the terminal, split transmission of the data of the first session on downlink transmission paths corresponding to the N access network devices based on the split ratios indicated by the transmission parameters corresponding to the first transmission manner, or performing transmission of the data of the first session on a target downlink transmission path based on the target downlink transmission path indicated by the transmission parameters corresponding to the second transmission manner.

According to a second aspect, a communication method is provided. The method includes: sending, by a session management function entity, reporting indication information to N access network devices, wherein the reporting indication information sent to a first access network device indicates that the first access network device sends transmission assistance information to a first device, wherein the first access network device is one of the N access network devices, wherein the transmission assistance information of the N access network devices indicates transmission performance of transmission paths corresponding to the N access network devices, wherein the first device comprises a terminal and/or a user plane function entity, and wherein N is a positive integer greater than 1; and wherein the session management function entity is configured to manage a first session of the terminal, and wherein the N access network devices and the user plane function entity are configured to transmit data of the first session;and sending, by the session management function entity, transmission indication information to the first device, wherein the transmission indication information comprises second transmission indication information, wherein the second transmission indication information indicates that the first device determines, based on the transmission assistance information of the N access network devices, transmission parameters corresponding to the transmission manner of the data of the first session, wherein the transmission manner is a split transmission manner or a path selection transmission manner, wherein the transmission parameters corresponding to the split transmission manner indicate split ratios of the data of the first session on the transmission paths corresponding to the N access network devices, wherein the transmission parameters corresponding to the path selection transmission manner indicate a target transmission path of the data of the first session, and wherein the target transmission path is one of the transmission paths corresponding to the N access network devices.

In a possible implementation, the transmission indication information further includes first transmission indication information, and the first transmission indication information indicates the transmission manner of the data of the first session.

In a possible implementation, the first session includes at least one data flow, wherein the at least one data flow includes the first data flow; and wherein the data of the first session comprises the first data flow.

In a possible implementation, the method further includes: sending, by the session management function entity, a split rule or a transmission path selection rule to the first device, wherein the split rule indicates a correspondence between transmission assistance information and split ratios.

In a possible implementation, the method further includes: sending, by the session management function entity, capability information of the terminal to the user plane function entity, wherein the capability information of the terminal indicates air interface transmission capability of the terminal on the N access network devices.

In a possible implementation, before the sending, by the session management function entity, reporting indication information to the N access network devices, the method further includes: determining, by the session management function entity, that transmission paths corresponding to the N access network devices are associated with the first session of the terminal.

In a possible implementation, the method further includes: sending, by the session management function entity, reporting frequency indication information to the N access network devices, wherein the reporting frequency indication information indicates a sending frequency of the transmission assistance information.

According to a third aspect, a communication method is provided, comprising: receiving, by a first access network device, reporting indication information from a session management function entity; sending, by the first access network device, based on the reporting indication information, transmission assistance information to the session management function entity or a first device, wherein the transmission assistance information indicates transmission performance of transmission paths corresponding to the first access network device, and wherein the first device comprises a terminal and/or a user plane function entity; and wherein, the session management function entity is configured to manage a first session of the terminal, and wherein the first access network device and the user plane function entity are configured to transmit data of the first session.

In a possible implementation, the reporting indication information further indicates that the first access network device sends the transmission assistance information to the session management function entity; or the reporting indication information further indicates that the first access network device sends the transmission assistance information to the first device.

In a possible implementation, the method further includes: receiving, by the first access network device, reporting frequency indication information from the network function entity; and the sending, by the first access network device, the transmission assistance information to the session management function entity or the first device based on the reporting indication information comprises: sending, by the first access network device, the transmission assistance information to the session management function entity or the first device based on reporting frequency indicated by the reporting frequency indication information.

According to a fourth aspect, a communication method is provided, including: sending, by a session management function entity, reporting indication information to N access network devices, wherein the reporting indication information indicates that the N access network devices send transmission assistance information to the session management function entity, wherein the transmission assistance information of the N access network devices indicates performance of transmission paths corresponding to the N access network devices, and wherein N is a positive integer greater than 1; receiving, by the session management function entity, the transmission assistance information from the N access network devices; determining, by the session management function entity based on the transmission assistance information, transmission parameters corresponding to the transmission manner of the data of the first session of the terminal, wherein the transmission manner is a split transmission manner or a path selection transmission manner, wherein the transmission parameters corresponding to the split transmission manner indicate the split ratios of the data of the first session on the transmission paths corresponding to the N access network devices, wherein the transmission parameters corresponding to the path selection transmission manner indicate a target transmission path of the data of the first session, and wherein the target transmission path is one of the transmission paths corresponding to the N access network devices; sending, by the session management function entity, the transmission parameters to the first device; and wherein the first device comprises the terminal and/or a user plane function entity, wherein the session management function entity is configured to manage the first session, and wherein the N access network devices and the user plane function entity are configured to transmit data of the first session.

In the foregoing implementation, the session management function entity determines, based on the transmission assistance information sent by the access network device, the split ratios of the data of the first session on different transmission paths in the split transmission manner, or determines the target transmission path of the data of the first session in the path selection transmission manner. The access network device provides the transmission assistance information to the session management function entity. Compared with a user plane function entity performing PMF measurement to obtain transmission performance between the user plane function entity and the terminal, this can reduce a delay, improve reliability, and improve real-time performance, thereby improving decision-making performance.

In a possible implementation, the first session comprises at least one data flow, and the at least one data flow includes a first data flow; and wherein the data of the first session includes the first data flow.

In a possible implementation, the method further comprises: sending, by the session management function entity, transmission indication information to the first device, wherein the transmission indication information includes third transmission indication information, and the third transmission indication information indicates that the first device transmits the data of the first session based on the transmission parameters.

In a possible implementation, the transmission indication information further includes fourth transmission indication information, and the fourth transmission indication information indicates a transmission manner of the data of the first session.

In a possible implementation, the method further comprises: sending, by the session management function entity, reporting frequency indication information to the N access network devices, wherein the reporting frequency indication information indicates a sending frequency of the transmission assistance information.

In a possible implementation, the determining, by the session management function entity, based on the transmission assistance information, transmission parameters corresponding to the transmission manner of the data of the first session comprises: determining, by the session management function entity, based on the transmission assistance information and a split rule, transmission parameters corresponding to the split transmission manner of the data of the first session; or determining, by the session management function entity, based on the transmission assistance information and a path selection rule, transmission parameters corresponding to the path selection transmission manner of the data of the first session.

In a possible implementation, the determining, by the session management function entity, based on the transmission assistance information, transmission parameters corresponding to the transmission manner of the data of the first session comprises: determining, by the session management function entity, based on the transmission assistance information and capability information of the terminal, transmission parameters corresponding to the transmission manner of the data of the first session; and wherein the capability information of the terminal indicates an air interface transmission capability of the terminal on the N access network devices.

In a possible implementation, the method further comprises: receiving, by the session management function entity, the capability information from the terminal.

In a possible implementation, before the sending, by the session management function entity, reporting indication information to the N access network devices, the method further comprises: determining, by the session management function entity, that transmission paths corresponding to the N access network devices are associated with the first session of the terminal.

According to a fifth aspect, a communication method is provided, including: receiving, by a first device, from a session management function entity, transmission parameters corresponding to a transmission manner, wherein the transmission manner is a split transmission manner or a path selection transmission manner, wherein the transmission parameters corresponding to the split transmission manner indicate split ratios of data of a first session on transmission paths corresponding to N access network devices, wherein the transmission parameters corresponding to the path selection transmission manner indicate a target transmission path of the data of the first session, wherein the target transmission path is one of the transmission paths corresponding to the N access network devices, wherein the transmission parameters are determined based on the transmission assistance information of the N access network devices, wherein the transmission assistance information of the N access network devices indicates transmission performance of transmission paths corresponding to the N access network devices, wherein the first device comprises a terminal and/or a user plane function entity, and wherein N is a positive integer; and wherein the session management function entity is configured to manage the first session of the terminal, and wherein the N access network devices and the user plane function entity are configured to transmit data of the first session; and transmitting, by the first device, the data of the first session based on the transmission parameters.

In a possible implementation, the method further comprises: receiving, by the first device, transmission indication information from the session management function entity, wherein the transmission indication information includes third transmission indication information, and the third transmission indication information indicates that the first device transmits data of the first session based on the transmission parameters.

In a possible implementation, the transmission indication information further includes fourth transmission indication information, and the fourth transmission indication information indicates a transmission manner of the data of the first session.

In a possible implementation, the first session includes at least one data flow, the at least one data flow includes a first data flow, and the data of the first session includes the first data flow.

In a possible implementation, the transmitting, by the first device, the data of the first session based on the transmission parameters comprises: performing, by the user plane function entity, based on the split ratios indicated by the transmission parameters corresponding to a first transmission manner, split transmission of the data of the first session on the downlink transmission paths corresponding to the N access network devices, or performing, by the user plane function entity, based on a target downlink transmission path indicated by the transmission parameters corresponding to a second transmission manner, transmission of the data of the first session on the target downlink transmission path; or performing, by the terminal, based on the split ratios indicated by the transmission parameters corresponding to a first transmission manner, split transmission of the data of the first session on the downlink transmission paths corresponding to the N access network devices, or, performing, by the terminal, based on a target uplink transmission path indicated by the transmission parameters corresponding to a second transmission manner, transmission of the data of the first session on the target uplink transmission path.

According to a sixth aspect, a communication method is provided, including: sending, by a session management function entity, first indication information to a first access network device in N access network devices, wherein the first indication information indicates that the first access network device determines transmission parameters corresponding to a transmission manner of data of a first session, wherein the transmission manner is a split transmission manner or a path selection transmission manner, wherein the transmission parameters corresponding to the split transmission manner indicate split ratios of the data of the first session on transmission paths corresponding to the N access network devices, wherein the transmission parameters corresponding to the path selection transmission manner indicate a target transmission path of the data of the first session, wherein the target transmission path is one of the transmission paths corresponding to the N access network devices, wherein the transmission parameters are determined based on transmission assistance information of the N access network devices, wherein the transmission assistance information of the N access network devices indicates transmission performance of the transmission paths corresponding to the N access network devices, and wherein N is a positive integer greater than 1; and sending, by the session management function entity, transmission indication information to a first device, wherein the transmission indication information comprises fifth transmission indication information, wherein the fifth transmission indication information indicates that the first device transmits data of a first session based on the transmission parameters, wherein the first device comprises a terminal and/or a user plane function entity, wherein the session management function entity is configured to manage the first session of the terminal, and wherein the N access network devices and the user plane function entity are configured to transmit the data of the first session.

In the foregoing implementation, the access network device determines, based on the transmission assistance information of the access network device and other access network devices, the split ratios of the data of the first session on different transmission paths in the split transmission manner, or determines the target transmission path of the data of the first session in the path selection transmission manner. By providing the transmission assistance information, the access network device can reduce a delay, improve reliability, and improve real-time performance, thereby improving decision-making performance.

In a possible implementation, the first session includes at least one data flow, and the at least one data flow includes a first data flow. The fifth transmission indication information indicates that the first device performs transmission on the first data flow based on the transmission parameters.

In a possible implementation, the transmission indication information further includes sixth transmission indication information, and the sixth transmission indication information indicates the transmission manner of the data of the first session.

In a possible implementation, the method further comprises: sending, by the session management function entity, an identifier or an address of a second access network device to the first access network device, wherein the second access network device is at least one access network device in the N access network devices other than the first access network device.

In a possible implementation, before the session management function entity sends the first indication information to the first access network device in the N access network devices, the method further comprises: determining, by the session management function entity, that the transmission paths corresponding to the N access network devices are associated with the first session of the terminal.

In a possible implementation, the first indication information further indicates that the first access network device sends the transmission parameters to the first device; or the method further includes: sending, by the session management function entity, second indication information, wherein the second indication information indicates that the first access network device sends the transmission parameters to the first device.

In a possible implementation, the first indication information further indicates that the first access network device sends the transmission parameters to the session management function entity, and the method further includes: sending, by the session management function entity, the transmission parameters to the first device; or the method further comprises: sending, by the session management function entity, second indication information, wherein the second indication information indicates that the first access network device sends the transmission parameters to the session management function entity; and sending, by the session management function entity, the transmission parameters to the first device.

According to a seventh aspect, a communication method is provided, including: receiving, by a first device, transmission indication information from a control plane function entity (for example, a session management function entity), wherein the transmission indication information includes fifth transmission indication information, and wherein the fifth transmission indication information indicates that the first device transmits the data of the first session based on the transmission parameters corresponding to a transmission manner; and receiving, by the first device, from a first access network device, transmission parameters corresponding to the transmission manner, wherein the transmission manner is a split transmission manner or a path selection transmission manner, wherein the transmission parameters corresponding to the split transmission manner indicate split ratios of data on transmission paths corresponding to N access network devices, wherein the transmission parameters corresponding to the path selection transmission manner indicate a target transmission path of data, wherein the target transmission path is one of the transmission paths corresponding to the N access network devices, wherein the first device comprises a terminal and/or a user plane function entity, wherein the session management function entity is configured to manage the first session of the terminal, and wherein the N access network devices and the user plane function entity are configured to transmit data of the first session; and transmitting, by the first device, the data of the first session based on the transmission parameters.

In a possible implementation, the first session includes at least one data flow, wherein the at least one data flow includes a first data flow; and the fifth transmission indication information indicates that the first device transmits the first data flow based on the transmission parameters.

In a possible implementation, the transmission indication information further includes sixth transmission indication information, and the sixth transmission indication information indicates the transmission manner of data of the first session.

In a possible implementation, the transmitting, by the first device, the data of the first session based on the transmission parameters includes: transmitting, by the first device, the data of the first session based on the transmission parameters and a transmission performance measurement result.

In a possible implementation, the transmitting, by the first device, the data of the first session based on the transmission parameters includes: performing, by the user plane function entity, based on split ratios indicated by the transmission parameters corresponding to a first transmission manner, split transmission of the data of the first session on downlink transmission paths corresponding to the N access network devices, or performing, by the user plane function entity, based on a target downlink transmission path indicated by the transmission parameters corresponding to a second transmission manner, transmission of the data of the first session on the target downlink transmission path; or performing, by the terminal, based on split ratios indicated by the transmission parameters corresponding to a first transmission manner, split transmission of the data of the first session on downlink transmission paths corresponding to the N access network devices, or performing, by the terminal, based on a target uplink transmission path indicated by the transmission parameters corresponding to a second transmission manner, transmission of the data of the first session on the target uplink transmission path.

According to an eighth aspect, a communication method is provided, including: receiving, by a first access network device, first indication information from a session management function entity, wherein the first indication information indicates that the first access network device determines transmission parameters corresponding to a transmission manner of data of a first session, wherein the transmission manner is a split transmission manner or a path selection transmission manner, wherein the transmission parameters corresponding to the split transmission manner indicate split ratios of the data of the first session on transmission paths corresponding to the N access network devices comprising the first access network device, wherein the transmission parameters corresponding to the path selection transmission manner indicate a target transmission path of the data of the first session, wherein the target transmission path is one of transmission paths corresponding to the N access network devices, and wherein N is a positive integer greater than 1; and determining, by the first access network device, based on the transmission assistance information of the N access network devices, transmission parameters corresponding to the transmission manner of the data of the first session, wherein the transmission assistance information of the N access network devices indicates transmission performance of transmission paths corresponding to the N access network devices; and sending, by the first access network device, the transmission parameters to a first device or the control plane function entity, wherein the first device comprises a terminal and/or a user plane function entity; and wherein the session management function entity is configured to manage the first session of the terminal, and wherein the N access network devices and the user plane function entity are configured to transmit the data of the first session.

In a possible implementation, the method further includes: obtaining, by the first access network device, transmission assistance information of other access network devices in the N access network devices, except the first access network device.

In a possible implementation, the method further includes: receiving, by the first access network device, an identifier or an address of a second access network device, wherein the second access network device includes other access network devices in the N access network devices, except the first access network device; and obtaining, by the first access network device, transmission assistance information of the second access network device from the second access network device based on the identifier or the address of the second access network device.

In a possible implementation, the identifier or address of the second access network device is sent by the session management function entity to the first access network device, or is sent by the access and mobility management function entity to the first access network device, or is sent by the terminal to the first access network device.

In a possible implementation, the method further includes: receiving, by the first access network device, reporting frequency indication information from the session management function entity; and indicating, by the first access network device, other access network devices in the N access network devices except the first access network device to send transmission assistance information at a reporting frequency indicated by the reporting frequency indication information.

In a possible implementation, the method further includes: determining, by the first access network device, transmission parameters corresponding to a transmission manner of the data of the first session based on the transmission assistance information of the N access network devices. The capability information of the terminal indicates an air interface transmission capability of the terminal on the N access network devices.

According to the ninth aspect, a communication apparatus is provided, including a unit or module configured to perform any one of the methods in any one of the first aspect to the eighth aspect.

According to the tenth aspect, a communication apparatus is provided, including: one or more processors configured to perform the method described in any one of the first aspect to the eighth aspect.

According to the eleventh aspect, a communication system is provided, including: a first device that implements the method described in any one of the first aspect; a session management function entity that implements the method described in any one of the second aspect; and a first access network device that implements the method described in any one of the third aspect. The first device includes a terminal and/or a user plane function entity.

According to the twelfth aspect, a computer-readable storage medium is provided. The computer-readable storage medium stores a computer program or instructions. When the computer program or instructions are executed by a communication apparatus, the method described in any one of the first aspect to the eighth aspect is implemented.

According to the thirteenth aspect, a chip system is provided, including: a memory, configured to store a computer program; a processor; and when the processor invokes the computer program from the memory and runs the computer program, a communication apparatus that has the chip system installed is enabled to perform the method described in any one of the first aspect to the eighth aspect.

Fourteenth aspect: A computer program product is provided. When the computer program product is invoked by a computer, the computer is enabled to perform the method according to any one of the first aspect to the eighth aspect.

### BRIEF DESCRIPTION OF DRAWINGS

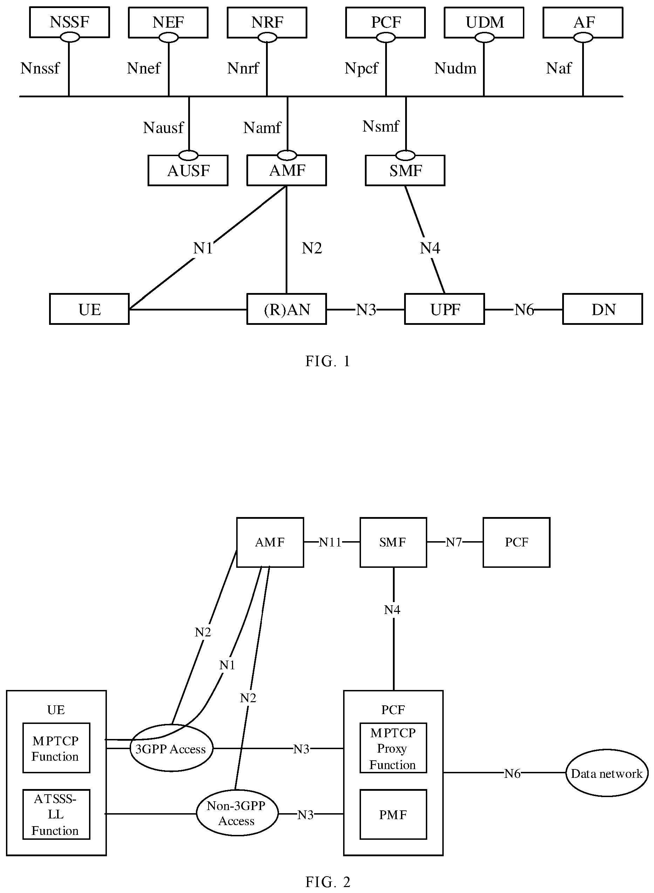

FIG. 1 is a schematic diagram of a communication system architecture applicable to an embodiment of this application;
FIG. 2 is a schematic diagram of an ATSSS architecture applicable to an embodiment of this application;

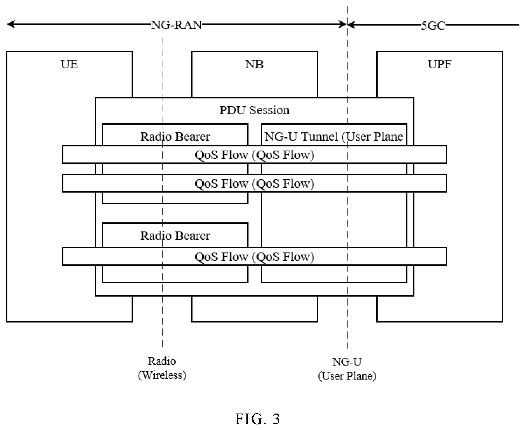

FIG. 3 is a schematic diagram of a 5G QoS model applicable to an embodiment of this application.

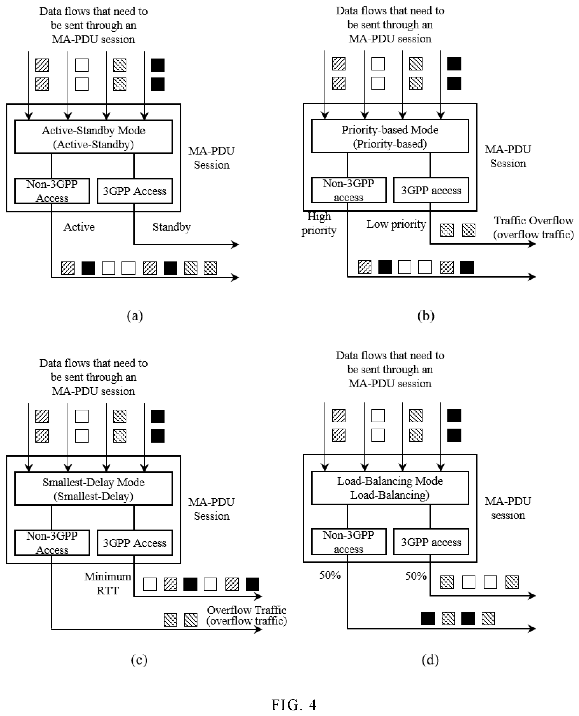

FIG. 4 is a schematic diagram of a steering mode according to an embodiment of this application;

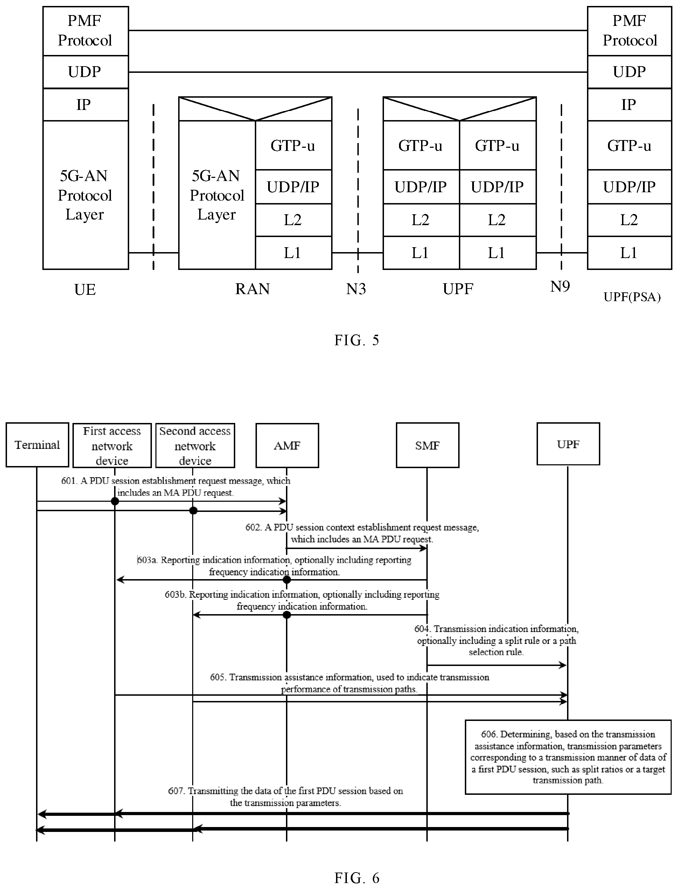

FIG. 5 is a schematic diagram of performing measurement based on a PMF protocol according to an embodiment of this application;
FIG. 6 is a schematic flowchart of determining, by a user plane function entity, split ratios of data or a target transmission path of data based on transmission assistance information of the N access network devices when N access network devices are connected to the same access and mobility management function entity according to an embodiment of this application;

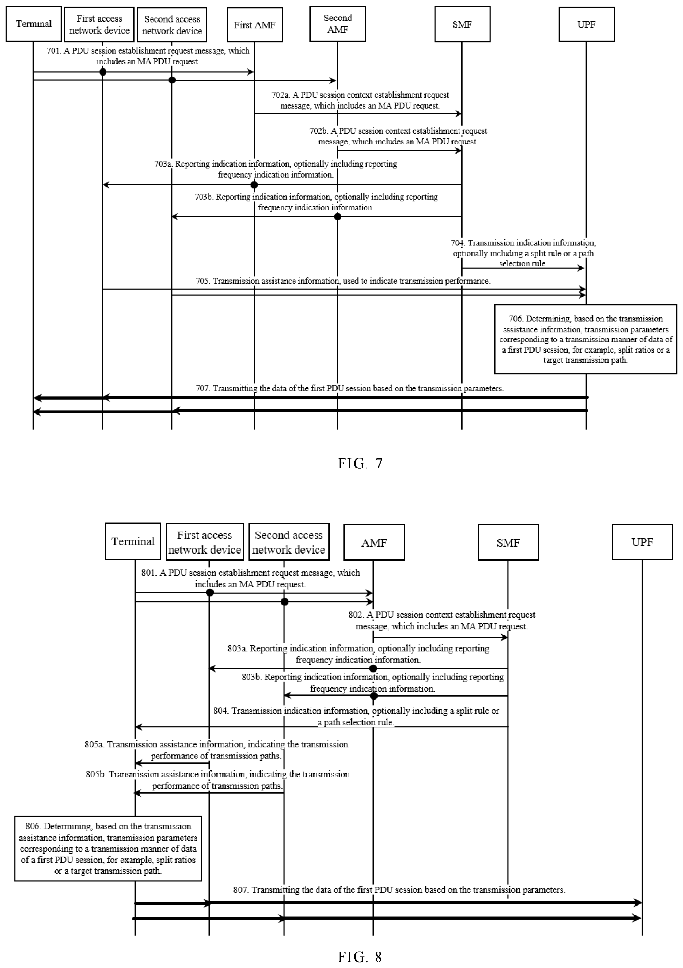

FIG. 7 is a schematic flowchart of determining, by a user plane function entity, split ratios of data or a target transmission path of data based on transmission assistance information of the N access network devices when N access network devices are connected to different access and mobility management function entities according to an embodiment of this application;
FIG. 8 is a schematic flowchart of determining, by a terminal, split ratios of data or a target transmission path of data based on transmission assistance information of the N access network devices when N access network devices are connected to the same access and mobility management function entity according to an embodiment of this application;

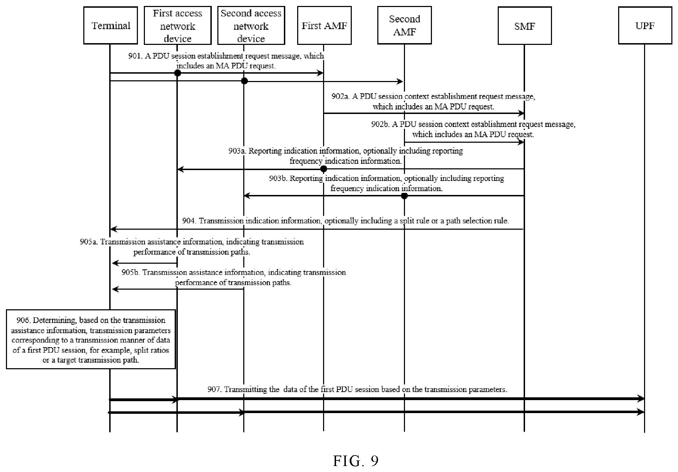

FIG. 9 is a schematic flowchart illustrating a process in which, in an embodiment of this application, when N access network devices are connected to different access and mobility management function entities, a terminal determines split ratios of data or a target transmission path of the data based on transmission assistance information of the N access network devices;

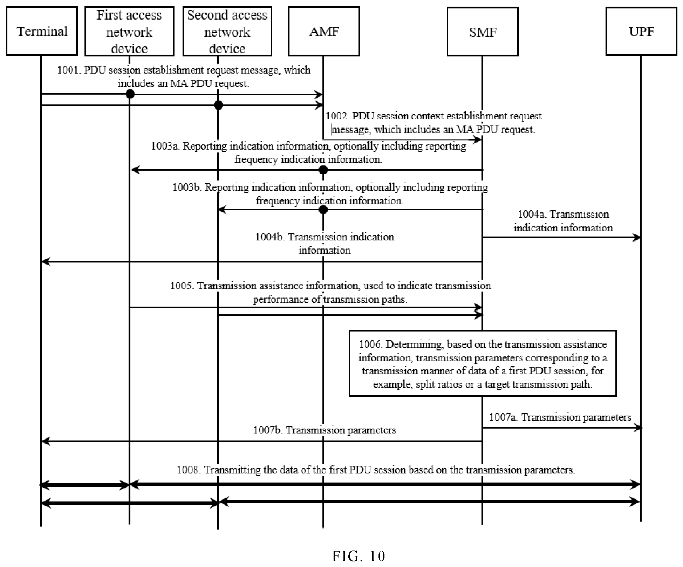

FIG. 10 is a schematic flowchart illustrating a process in which, in an embodiment of this application, when N access network devices are connected to the same access and mobility management function entity, a session management function entity determines, based on transmission assistance information of the N access network devices, split ratios of data or a target transmission path of the data;

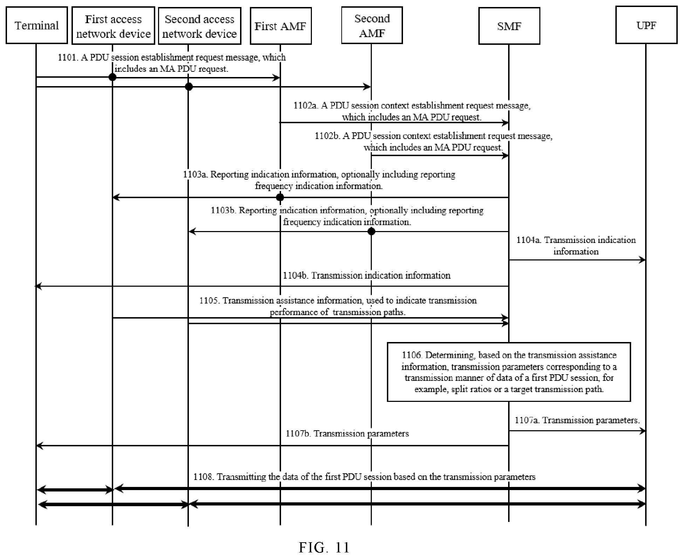

FIG. 11 is a schematic flowchart illustrating a process in which, in an embodiment of this application, when N access network devices are connected to different access and mobility management function entities, a session management function entity determines, based on transmission assistance information of the N access network devices, split ratios of data or a target transmission path of the data;

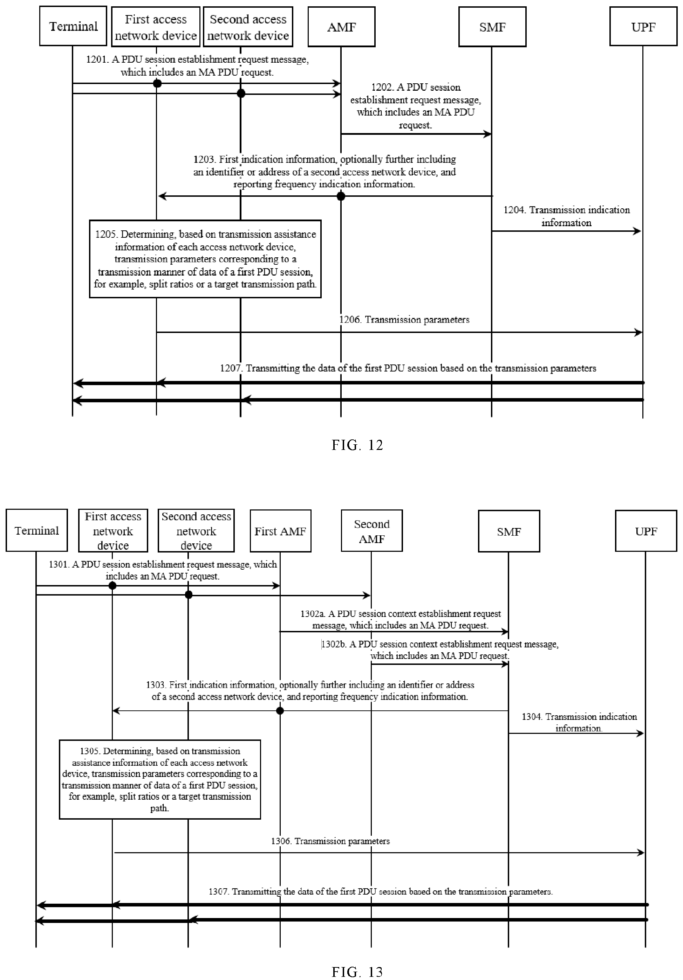

FIG. 12 is a schematic flowchart illustrating a process in which, in an embodiment of this application, when N access network devices are connected to the same access and mobility management function entity, for downlink transmission, a first access network device determines, based on transmission assistance information of the N access network devices, split ratios of data or a target transmission path of the data.
FIG. 13 is a schematic flowchart illustrating a process in which, in an embodiment of this application, when the N access network devices are connected to different access and mobility management function entities, for downlink transmission, the first access network device determines split ratios of data or a target transmission path of the data based on transmission assistance information of the N access network devices;

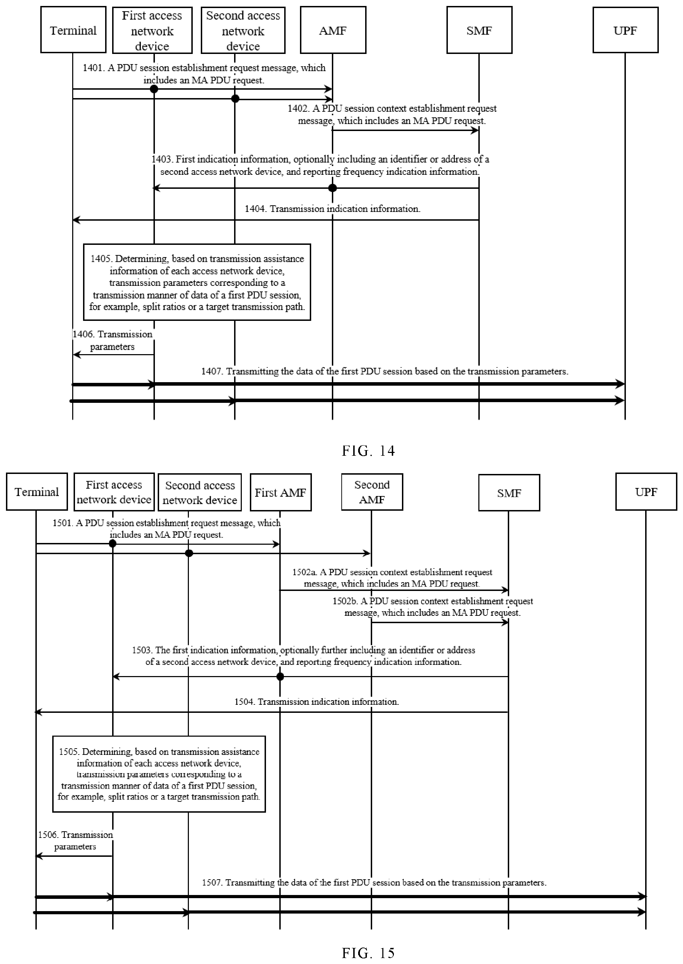

FIG. 14 is a schematic flowchart illustrating a process in which, in an embodiment of this application, when the N access network devices are connected to the same access and mobility management function entity, for uplink transmission, the first access network device determines split ratios of data or a target transmission path of the data based on transmission assistance information of the N access network devices;
FIG. 15 is a schematic flowchart illustrating a process in which, in an embodiment of this application, when the N access network devices are connected to different access and mobility management function entities, for uplink transmission, the first access network device determines split ratios of data or a target transmission path of the data based on transmission assistance information of the N access network devices;

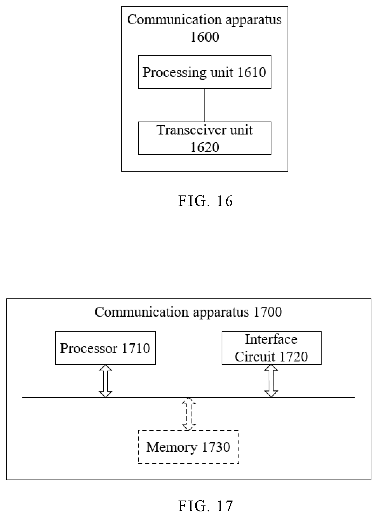

FIG. 16 is a schematic structural diagram illustrating a communication apparatus according to an embodiment of this application;
FIG. 17 is a schematic structural diagram of a communication apparatus according to another embodiment of this application.

### DESCRIPTION OF EMBODIMENTS

The embodiments of this application may be applied to various communications systems, for example: a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WIMAX) communications system, a 5th generation (5th generation, 5G) system, or a new radio (new radio, NR), or may be applied to a future communications system or another similar communications system, etc.

Referring to FIG. 1, FIG. 1 is a schematic diagram of a 5th generation (5th generation, 5G) network architecture based on a service-based architecture according to 3GPP. The 5G network architecture may include an access network device and a core network device. A terminal accesses a data network (data network, DN) by using an access network device and a core network device.

The terminal may include various handheld devices, in-vehicle devices, wearable devices, computing devices, or other processing devices connected to a wireless modem that have a wireless communication function. In Internet of Vehicles communication, a roadside unit (road side unit, RSU) may also be used as a terminal. The terminal may also be referred to as a terminal device. The terminal may also refer to user equipment (user equipment, UE), an access terminal, a subscriber unit (subscriber unit), a user agent, a cellular phone (cellular phone), a smart phone (smart phone), a wireless data card, or a personal digital assistant (personal digital assistant, PDA), tablet computers, wireless modems (modem), handsets (handset), laptop computers (laptop computers), point of sale (point of sale, POS) machines, customer-premises equipment (customer-premises equipment, CPE), a machine type communication (machine type communication, MTC) terminal, a communication device carried on a high-altitude aircraft, a wearable device, an unmanned aerial vehicle, a robot, a terminal in D2D, a vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in a smart city (smart city), a wireless terminal in a smart home (smart home), a terminal device in a future communications network, or the like.

The access network device may be a RAN or a wired access network device. The RAN is mainly responsible for radio resource management, quality of service management, data compression, and encryption on the air interface side, provides access services for terminals, and forwards user data between terminals and the core network. The RAN can also be regarded as a base station in the network. In systems using different radio access technologies, names of devices having a base station function may be different. For example, in a 5th generation (5th generation, 5G) system, devices having a base station function are referred to as gNBs.

For example, the access network device in this embodiment of this application may be any communications device that is configured to communicate with the terminal and has a wireless transceiver function. The access network device includes but is not limited to: an evolved node B (evolved Node B, eNB), a radio network controller (radio network controller, RNC), a node B (Node B, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP), a wireless relay node, a wireless backhaul node, a transmission point (transmission point, TP) or a transmission and reception point (transmission and reception point, TRP) in a wireless fidelity (wireless fidelity, Wi-Fi) system, or the like, may be a 5G mobile communications system, for example, a gNB in a new radio (new radio, NR) system, or a transmission point (TRP or TP), one or one group (including a plurality of antenna panels) antenna panels of a base station in a 5G mobile communications system, or may be a network node that forms a gNB or a transmission point, for example, a baseband unit (BBU), a distributed unit (distributed unit, DU), or the like.

In some deployments, the gNB may include a centralized unit (centralized unit, CU) and a DU. The gNB may further include an active antenna unit (active antenna unit, AAU). The CU implements some functions of the gNodeB, and the DU implements some functions of the gNodeB. For example, the CU is responsible for processing a non-real-time protocol and a service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU performs some physical layer processing functions, RF processing, and functions related to active antennas. The information at the RRC layer is generated by the CU, and is finally encapsulated by the PHY layer of the DU into the PHY layer information, or is transformed from the information at the PHY layer. Therefore, in this architecture, the higher layer signaling, such as the RRC layer signaling, may also be considered as being sent by the DU, or sent by the DU+AAU. It may be understood that the access network device may be a device that includes one or more of a CU node, a DU node, and an AAU node. In addition, the CU may be divided into an access network device in an access network, or the CU may be divided into an access network device in a core network (core network, CN). This is not limited in this application.

The terminal and the access network device communicate with each other by using an air interface technology (for example, an NR or an LTE technology). Terminals may also communicate with each other by using an air interface technology (for example, an NR or an LTE technology).

The access network device and the terminal may be fixed, or may be movable. The access network device and the terminal may be deployed on land, including indoor or outdoor, handheld or vehicle-mounted. It can also be deployed on the water surface; it can also be deployed in aircraft, balloons and satellites in the air.

The core network device is also referred to as a core network element, and may include but is not limited to some or all of the following network elements: a user plane network element and a control plane network element. The control plane network element may include a mobility management network element, a session management network element, and the like. In addition, it may further include a policy control network element, a unified data management network element, an authentication server function (authentication server function, AUSF), a network repository function (network repository function, NRF), and a network exposure function (network exposure function, NEF), a network slice selection function (network slice selection function, NSSF), and an application function (application function, AF).

The user plane network element serves as an interface with the data network (DN). It is responsible for forwarding and receiving user data in the terminal. It can receive user data from the data network and transmit it to the terminal device through the access network device. Alternatively, it can receive user data from the terminal device through the access network device and forward it to the data network. In a 5G mobile communication system, this user plane network element can be a UPF. The transmission resources and scheduling functions for providing services to the terminal device in the UPF are managed and controlled by the SMF network element.

The data network provides services such as carrier services, internet access, or third-party services. It includes servers, and the server-side implements functions such as video source encoding and rendering. In a 5G mobile communication system, the data network can be referred to as a data network, abbreviated as DN.

The mobility management network element is primarily responsible for signaling processing, such as: access control, mobility management, attach and detach, and gateway selection functions. In a 5G mobile communication system, the mobility management network element can be an AMF. When the AMF provides services for sessions in the terminal, it can provide the session with a control plane storage resource for storing session identifiers, SMF network element identifiers associated with session identifiers, and the like.

The session management network element is primarily responsible for selecting user plane network elements, redirecting user plane network elements, allocating Internet Protocol (internet protocol, IP) addresses, establishing, modifying, and releasing bearers, as well as controlling the quality of service (Quality of Service). In a 5G mobile communication system, this network element can be an SMF, which is used for session management after a user accesses the network. This includes the establishment, modification, activation, deactivation, and release of PDU sessions.

In a 5G mobile communication system, the policy control network element can be a Policy Control Function (Policy Control Function, PCF), which is primarily responsible for making decisions related to policy control. It provides policy rules for control plane functions and implements traffic-based charging control functions.

In a 5G mobile communication system, the unified data management network element can be a unified data management (unified data management, UDM) network element, which is primarily responsible for managing subscription data for UEs. This includes the storage and management of UE identifiers, as well as UE access authorization.

Network Exposure Function (Network Exposure Function, NEF): Primarily supports secure interaction between 3GPP networks and third-party applications.

The Application Function (AF) primarily supports interaction with the 3GPP core network to provide services, such as influencing data routing decisions, policy control functions, or providing some third-party services to the network side.

The Network Slice Selection Function (network slice selection function, NSSF) is primarily responsible for network slice selection. It determines the network slice instances that a UE is allowed to access based on the UE's slice selection assistance information, subscription information, etc.

The Authentication Server Function (AUSF) supports access authentication for both 3GPP and non-3GPP networks.

The Network Repository Function (network repository function, NRF) supports the registration and discovery of network functions.

Based on the system architecture shown in FIG. 1, the user plane is used for carrying service data, and the control plane is used for carrying signaling messages. The user's data traffic can be transmitted through a PDU session established between the UE and the DN. The transmission will pass through the (R)AN and UPF. The control plane network element is primarily responsible for functions such as authentication and authorization, registration management, session management, mobility management, and policy control. These functions ensure the reliable and stable transmission of user-layer traffic.

FIG. 1 also illustrates the interaction relationships and corresponding interfaces between the terminal, access network device, and core network elements. For example, the UE and AMF can interact through the N1 interface, and the interaction messages are referred to as N1 Messages. Some interfaces are implemented using a service-based interface approach.

Refer to FIG. 2, which shows an architecture applicable to the embodiments of this application and that supports access traffic steering, switching, and splitting (access traffic steering, switching, and splitting, ATSSS) features. In this architecture, both the UE and the UPF support the ATSSS feature. That is, they can simultaneously transmit the service flow data that needs to be sent through both 3GPP access (3GPP access) technology and non-3GPP access (non-3GPP access) technology, in order to improve transmission efficiency.

The N3IWF and TNGF both belong to non-3GPP access, while the RAN belongs to 3GPP access. In the case where a UE establishes a multi-access (MA) PDU session, that is, the PDU session is established on both 3GPP access and non-3GPP access, the UE and UPF perform different traffic steering modes according to the policy information delivered by the SMF, to steer or select the transmission path for the data flow or QoS flow on the corresponding transmission paths of 3GPP access and non-3GPP access.

In the future ATSSS architecture, for example, the ATSSS architecture in a future communications system, the UE can transmit service flow data through two 3GPP accesses. This future ATSSS architecture is similar to the ATSSS architecture shown in FIG. 2, for example, the non-3GPP access in the ATSSS architecture diagram shown in FIG. 2 is replaced with a 3GPP access.

In a 5G system, in order to ensure the end-to-end service quality of a service, a 5G QoS model based on QoS flows (QoS flow) is proposed, as shown in FIG. 3. This 5G QoS model supports both QoS flows with a guaranteed bit rate (GBR QoS flow, wherein GBR is the English abbreviation of guaranteed bit rate, that is, a guaranteed bit rate) and QoS flows without a guaranteed bit rate (Non-GBR QoS Flow). For data packets controlled by the same QoS flow, the same transmission processing (such as scheduling, admission thresholds, etc.) is performed. For a UE, one or more PDU sessions can be established with a 5G network; and one or more QoS flows can be established in each PDU session. Each QoS flow is identified by a QFI (QoS Flow Identifier, QoS flow identifier), and the QFI uniquely identifies a QoS flow in a session.

In the embodiments of this application, a QoS flow is also referred to as a data flow. The QoS flow and the data flow may be used interchangeably.

The ATSSS architecture shown in FIG. 2 can support multiple steering modes (steering mode). For example, the supported steering modes may include: an active-standby (active-standby) mode, a smallest delay (smallest delay) mode, a load-balancing (load-balancing) mode, and a priority-based (priority-based) mode. The steering mode is used to determine how data is to be transmitted. Simply put, it determines which data flows are to be transmitted via 3GPP access technology, and which data flows are to be transmitted via non-3GPP access technology. The following briefly describes the mechanism of each steering mode.

Active-standby mode: Refer to (a) in FIG. 4. In this mode, one of the transmission paths is specified as the active path (also referred to as an Active path), and the other transmission path is specified as the standby path (also referred to as a Standby path)). The active path may be 3GPP access or non-3GPP access. When the active path is available, all data of the service flow is transmitted to the peer end via the active path. When the active path is unavailable, all data of the service flow is switched to the standby path for transmission.

Priority-based mode: Refer to (b) in FIG. 4. In this mode, one of the transmission paths is designated as a high-priority transmission path, while the other transmission path is designated as a low-priority transmission path. When the high-priority transmission path is not congested, all data of the service flow is transmitted through the high-priority transmission path. When the high-priority transmission path becomes congested, a portion of the data of the service flow is transmitted through the low-priority transmission path. For example, if the round-trip time (round-trip time, RTT) measurement or packet error rate (packet error rate, PER) or packet loss rate (packet loss rate, PLR) measurement between the UE and the UPF does not exceed the set threshold, it indicates that the high-priority transmission path is not congested. If the RTT or PER measurement between the UE and the UPF exceeds the set threshold, it indicates that the high-priority transmission path is congested.

Smallest delay mode: Refer to (c) in FIG. 4. In this mode, a transmission path with a shortest delay is selected to transmit data of a service flow. In this mode, the UE or the UPF needs to monitor a transmission delay of a path in real time. An implementation manner may be implemented by using a transport layer protocol, for example, MPTCP (a multipath transmission protocol, that is, Multipath TCP), whose layer has a function of detecting the RTT, or is implemented by the PMF module in the UPF.

Load balancing mode: Refer to (d) in FIG. 4. In this mode, data of the service flow is distributed to different transmission paths for transmission according to a proportion. The ratio may be distributed by the network and is fixed (that is, it does not change with the change of the network load). Alternatively, the split ratios may be changed based on an RTT measurement or a PER measurement between the UE and the UPF.

Measurement is performed between the UE and the UPF based on the PMF protocol. The measurement includes an RTT measurement, a PER measurement, a PLR measurement, and the like. FIG. 5 is an example of a schematic diagram of performing measurement based on the PMF protocol according to an embodiment of this application. The UE and the UPF may use the measurement result to determine split ratios of the data flow (for example, in a load balancing mode) or determine a transmission path of the data flow (e.g., in smallest delay mode or priority-based mode).

When PMF measurement is performed between the UE and the UPF, bidirectional transmission needs to be performed between the UE and the UPF. Because a transmission path between the UE and the UPF is relatively long, it is difficult to ensure real-time performance and reliability. Therefore, real-time performance and reliability of the split ratio decision or transmission path decision are affected.

Therefore, embodiments of this application provide a communication method and a related apparatus that can implement the method. In this embodiment of this application, the terminal side and/or the network side may determine the split ratios of the data flow or determine the target transmission path of the data flow based on the transmission assistance information sent by the access network device, to improve real-time performance and reliability of the transmission decision, that is, improve transmission decision performance.

The following describes the embodiments of this application in detail with reference to the accompanying drawings.

First, some devices in the embodiments of this application are described. A device in the embodiments of this application includes a terminal, an access network device, and a core network device.

Using the 5G system as an example, the access network device may be the access network device in the architecture shown in FIG. 1. This embodiment of this application relates to N access network devices, and N is a positive integer greater than 1. The N access network devices may be N RAN devices; or the N access network devices are N N3IWF devices; or the N access network devices are N TNGF devices; or the N access network devices comprise at least one RAN device and at least one N3IWF device; or the N access network devices comprise at least one RAN device and at least one TNGF device; or the N access network devices include at least one N3IWF device and at least one TNGF device.

Taking the 5G system as an example, the core network device may be a core network device in the architecture shown in FIG. 1. The core network device includes a control plane function entity and a user plane function entity (for example, a UPF). The control plane function entity includes a session management function entity (for example, an SMF)) and an access and mobility management function entity (for example, an AMF)).

Taking N=2 as an example, the terminal accesses a network by using two access network devices. For example, both of the two access network devices are RAN devices, or both of the two access network devices are 3GPP access devices.

It can be understood that the embodiments of this application may also be applied to another communications system, for example, a future communications system or a further evolved system. A device that implements the same or a similar function may be named differently in the 5G system and in another system. However, this does not affect implementation of this application.

Furthermore, the "transmission assistance information" involved in the embodiments of this application is described.

The transmission assistance information may be obtained by the access network device. The transmission assistance information of one access network device may be used to indicate transmission performance of a transmission path (for example, an N3 tunnel) corresponding to the access network device.

For example, using the first access network device as an example, the transmission assistance information of the first access network device may include one or more of the following information:
- Signalling status information (signalling status) measured by the first access network device. The signalling status information indicates the signalling status between the first access network device and the terminal. Optionally, the first access network device may measure an uplink signal (for example, an uplink reference signal) received from the terminal, to obtain the signalling status information. Optionally, the signalling status information may include a reference signal received power (reference signal received power, RSRP)), a reference signal received quality (reference signal received quality, RSRQ)), and the like. It may be understood that, in this embodiment of this application, a type of the uplink signal is not limited.
- Signalling status information received by the first access network device from the terminal. The signalling status information indicates the signalling status between the first access network device and the terminal. Optionally, the terminal may measure a downlink signal sent by the first access network device, and report a measurement result to the first access network device. The measurement result may include or indicate the signalling status information. Optionally, the signalling status information may include RSRP, RSRQ, and the like. It can be understood that, in embodiments of this application, the type of the downlink signal is not limited.
- Load information (load info) of the first access network device. For example, the load information may include information such as a load level. For example, the load level may be divided into high, medium, and low.
- Air interface transmission delay (Uu delay) between the first access network device and the terminal.
- Transmission rate between the first access network device and the terminal, for example, a transmission rate prediction value that can be provided by the first access network device for the terminal.
- Transmission reliability information between the first access network device and the terminal. For example, the reliability information includes a packet error rate (packet error rate, PER) of a data packet.

The transmission assistance information of the access network device is used to determine the transmission parameters. For example, the data of the first PDU session may be transmitted through N transmission paths corresponding to the N access network devices. The transmission assistance information of the N access network devices may be used to determine the transmission parameters corresponding to the transmission manner of the data of the PDU session on the N transmission paths. For example, if the transmission manner is a split transmission manner, the split ratios of the data of the first PDU session on the N transmission paths may be determined based on the transmission assistance information of the N access network devices. For another example, if the transmission manner is a path selection transmission manner, the target transmission path in the N transmission paths for the data of the first PDU session may be determined based on the transmission assistance information of the N access network devices.

In some embodiments of this application, the N access network devices may send respective transmission assistance information to the first device, and the first device may determine the split ratios of data or the target transmission path of the data based on the transmission assistance information of the N access network devices. The first device may include a terminal and/or a user plane function entity. The terminal may determine the split ratios or the target transmission path of the data in the uplink direction based on the transmission assistance information of the N access network devices, and the user plane function entity may determine the split ratios or the target transmission path of the data in the downlink direction based on the transmission assistance information of the N access network devices.

The following describes the foregoing method with reference to FIG. 6, FIG. 7, FIG. 8, and FIG. 9. In the procedures shown in FIG. 6, FIG. 7, FIG. 8, and FIG. 9, the terminal is connected to the user plane function entity by using the N access network devices, or the terminal has transmission paths corresponding to the N access network devices. In other words, transmission paths corresponding to the N access network devices are associated with one session (for example, the first PDU session) of the terminal. FIG. 6 describes a process in which a user plane function entity determines split ratios of data or a target transmission path of data based on transmission assistance information of the N access network devices when N access network devices are connected to the same access and mobility management function entity; FIG. 7 describes a process in which a user plane function entity determines split ratios of data or a target transmission path of the data based on transmission assistance information of the N access network devices when N access network devices are connected to different access and mobility management function entities; FIG. 8 describes a process in which a terminal determines, when N access network devices are connected to the same access and mobility management function entity, split ratios of data or a target transmission path of data based on transmission assistance information of the N access network devices; FIG. 9 describes a process in which a terminal determines split ratios of data or a target transmission path of the data based on transmission assistance information of the N access network devices when the N access network devices are connected to different access and mobility management function entities.

To simplify the description, in the processes shown in FIG. 6, FIG. 7, FIG. 8, and FIG. 9, all are based on the system architecture shown in FIG. 1. For example, it is described by taking that the control plane network function entity includes an SMF and an AMF, and the user plane function entity is a UPF as examples. Moreover, the number N of access network devices is 2, that is, the access network devices include a first access network device and a second access network device as examples. In the processes shown in FIG. 6, FIG. 7, FIG. 8, and FIG. 9, the terminal is connected to the UPF through the first access network device and the second access network device. Alternatively, it is described by taking that the terminal has two transmission paths corresponding to the two access network devices as examples. Alternatively, it is described by taking that the transmission paths corresponding to the first access network device and the second access network device are associated with the first PDU session of the terminal as examples. Alternatively, it is described by taking that the first PDU session is established on the first access network device and the second access network device as examples. Among them, the SMF is configured to manage the first PDU session of the terminal, and the UPF, the first access network device, and the second access network device are configured to transmit data of the first PDU session.

FIG. 6 shows a communication method according to an embodiment of this application. In the method, when the first access network device and the second access network device are connected to the same AMF, the access network device sends the transmission assistance information to the UPF based on the reporting indication information sent by the SMF. so that the UPF performs, based on the transmission assistance information received from different access network devices, split ratios decision or a transmission path decision on a data flow.

As shown in FIG. 6, the procedure may include the following steps.

Step 601: A terminal sends a PDU session establishment request message to an AMF by using a first access network device and a second access network device separately, to request to establish a first PDU session.

The message includes an MA PDU request (MA PDU request) and an identifier of the first PDU session, and the MA PDU request indicates that data of the first PDU session is transmitted by at least two access network devices. In other words, the MA PDU request indicates that the data of the first PDU session is transmitted on the transmission paths corresponding to the at least two access network devices. In other words, when the terminal requests to establish the first PDU session, the following steps in the procedure shown in FIG. 6 may be triggered.

Optionally, when the terminal requests to modify the first PDU session, the following steps of the procedure shown in FIG. 6 may also be triggered. Correspondingly, in this case, the PDU session establishment request message sent by the terminal may be replaced with a PDU session modification request message.

Above is merely an example illustrating that the following steps of the procedure shown in FIG. 6 may be triggered by using a PDU session establishment request message or a PDU session modification request message. It can be understood that the following steps may alternatively be triggered by using another message or event. This is not limited in the embodiments of this application.

Step 602: The AMF sends a PDU session context establishment request message to the SMF, wherein the message includes the MA PDU request.

Optionally, the PDU session context establishment request message may further include multi-access indication information. The multi-access indication information indicates a dual radio access type (dual radio access), or indicates that the terminal accesses through a dual access type. For example, the multi-access indication information indicates that the terminal accesses through 3GPP access and non-3GPP access respectively. For another example, the multi-access type indication information indicates that the terminal accesses through two 3GPP access types or two 3GPP access types. For example, the AMF separately receives, from two access network devices, a PDU session establishment request for the first PDU session, and the PDU session context establishment request message includes the multi-access indication information. In a case of two access network devices, the multi-access indication information indicates a dual radio access type or a dual 3GPP access type.

Optionally, the PDU session context establishment request message may further include an identifier of the first PDU session.

Step 603a and 603b: The SMF separately sends the reporting indication information to the first access network device and the second access network device.

Optionally, when determining that the transmission path corresponding to the first access network device and the transmission path corresponding to the first access network device are associated with the first PDU session of the terminal, the SMF separately sends the reporting indication information to the first access network device and the second access network device. This is because the AMF receives the two PDU session requests from the terminal, and both of the two PDU session requests are associated with the first PDU session. For example, the two PDU session requests are used to request to establish the first PDU session or to request to modify the first PDU session. Therefore, the SMF can determine that the data of the first PDU session of the terminal can be transmitted on the transmission path corresponding to the first access network device and the transmission path corresponding to the second access network device, or that the transmission path corresponding to the first access network device and the transmission path corresponding to the second access network device are associated with the first PDU session of the terminal.

The SMF may separately send reporting indication information to the first access network device and the second access network device through the AMF. Optionally, the SMF may separately send a session container (N2 SM information) to the first access network device and the second access network device through the AMF, wherein the container includes the reporting indication information. In a possible implementation, the reporting indication information sent by the SMF is associated with the identifier of the first PDU session. For example, the SMF sends the reporting indication information and the identifier of the first PDU session to the AMF. In this way, after receiving the reporting indication information, the AMF may determine that the reporting indication information needs to be sent to the first access network device or the second access network device that is used to transmit data of the first PDU session. In another possible implementation, in step 602, the AMF may send the identifier of the first access network device and the identifier of the second access network device that are associated with the identifier of the first PDU session to the SMF. In this way, in step 603a and step 603b, the SMF may send the reporting indication information to the AMF and indicate that the reporting indication information is to be sent to the first access network device or the second access network device. It should be understood that, in this application, a specific implementation in which the SMF separately sends the reporting indication information to the first access network device and the second access network device through the AMF is not limited.

In a possible implementation, the reporting indication information sent by the SMF to the first access network device and the first access network device may be the same, and both are used to indicate to send the transmission assistance information. In another possible implementation, the reporting indication information sent by the SMF to the first access network device may be different from the reporting indication information sent by the SMF to the second access network device. For example, the reporting indication information sent by the SMF to the first access network device indicates that the first access network device sends the transmission assistance information. The reporting indication information sent by the SMF to the second access network device is used to indicate the second access network device to send the transmission assistance information. The transmission assistance information of the two access network devices indicates transmission performance of the transmission paths corresponding to the two access network devices, and the transmission assistance information of the first access network device indicates transmission performance of the transmission path corresponding to the first access network device. The transmission assistance information of the second access network device indicates performance of the transmission path corresponding to the second access network device.

Optionally, the reporting indication information further indicates that the access network device sends the transmission assistance information to the UPF. For example, the reporting indication information may indicate the access network device to send the transmission assistance information for downlink transmission control, or indicate an identifier or an address of the UPF, or indicate a type of a target device for transmitting the assistance information, so that the access network device can determine to send the transmission assistance information to the UPF. Correspondingly, the first access network device and the second access network device send the transmission assistance information to the UPF based on the received reporting indication information.

Optionally, the SMF may further send the reporting frequency indication information to the first access network device. The first access network device sends the transmission assistance information to the UPF according to the reporting frequency indicated by the reporting frequency indication information. Similarly, the SMF may further send the reporting frequency indication information to the second access network device. The second access network device sends the transmission assistance information to the UPF according to the reporting frequency indicated by the reporting frequency indication information. The reporting frequency indication information may specifically indicate a quantity of times of reporting per second, or indicate a quantity of times of reporting every several seconds. Optionally, the reporting frequency indication information may be included in the reporting indication information for sending, or may be sent through a separate message.

Step 604: The SMF sends transmission indication information to the UPF. The transmission indication information includes first transmission indication information, and the first transmission indication information indicates a transmission manner of data of a first PDU session. The transmission manner may be a split transmission manner, a path selection transmission manner, or a redundancy transmission manner (or referred to as a redundancy transmission manner)).

The first PDU session includes at least one data flow, and the at least one data flow includes a first data flow. The data of the first PDU session includes the first data flow. Correspondingly, the first transmission indication information may indicate a transmission manner of the first data flow in the first PDU session. If the first PDU session includes multiple data flows, the first transmission indication information may also indicate transmission manners of the multiple data flows. The transmission manners of the multiple data flows may be the same or may be different. For example, the first transmission indication information indicates that the transmission manner of the first data flow in the first PDU session is a split transmission manner, and indicates that the transmission manner of the second data flow in the first PDU session is a path selection transmission manner. This is not limited in this application.

Optionally, the SMF may obtain, from the PCF, the information about the transmission manner of the data of the first PDU session, and then configure, for the UPF, the transmission manner of the data of the first PDU session by using the first transmission indication information.

Optionally, the PCF or the SMF determines, based on a requirement of the data of the first PDU session, the transmission manner of the data of the first PDU session. For example, the data of the first PDU session includes the first data flow. If a transmission rate requirement of the first data flow is relatively high, it is determined that the transmission manner of the first data flow is a split transmission manner. If a transmission reliability requirement of the first data flow is relatively high, it is determined that the transmission manner of the first data flow is a redundant transmission manner.

Optionally, the split transmission manner may include the load balancing mode shown in FIG. 4. Optionally, the path selection transmission manner may be the active/standby mode, the smallest delay mode, or the priority-based mode shown in FIG. 4. This is not limited in this application.

Optionally, the transmission indication information further includes second transmission indication information. The second transmission indication information indicates that the UPF determines, based on transmission assistance information of a first access network device and a second access network device, transmission parameters corresponding to a transmission manner of the data of the first PDU session. Alternatively, the second transmission indication information indicates that the UPF determines, based on transmission assistance information of an access network device, transmission parameters corresponding to a transmission manner of the data of the first PDU session. In other words, the second indication information only needs to indicate that the UPF determines the transmission parameters based on the transmission assistance information of the access network device, and does not need to indicate specifically which access network device's transmission assistance information is used to determine the transmission parameters.

In an implementation, the second transmission indication information is used to indicate the UPF to determine, based on the transmission assistance information of the first access network device and the transmission assistance information of the second access network device, the transmission parameters corresponding to the transmission manner of the first data flow of the first PDU session; in another implementation, the second transmission indication information indicates the UPF to separately determine, based on the transmission assistance information of the first access network device and the transmission assistance information of the second access network device, the transmission parameters corresponding to the transmission manner of each data flow in the first PDU session; in another implementation, the second transmission indication information indicates the UPF to determine, based on the transmission assistance information of the first access network device and the transmission assistance information of the second access network device, the transmission parameters corresponding to the transmission manner of the data of the first PDU session, or determine the transmission parameters at a granularity of the first PDU session. Different data flows with the same transmission manner correspond to the same transmission parameters. In other words, the second indication information may indicate to determine transmission parameters corresponding to the transmission manner of one or more data flows in the first PDU session (for example, a first data flow, or a first data flow and a second data flow) . In this case, the one or more data flows may be indicated with reference to an identifier of the data flow. Alternatively, the second indication information may indicate to separately determine transmission parameters corresponding to a transmission manner of each data flow in the first PDU session. Transmission manners of different data flows may be different, and transmission parameters corresponding to different data flows with the same transmission manner may be different. Alternatively, the second indication information may indicate to determine, by using the first PDU session as a granularity, transmission parameters corresponding to a transmission manner of data of the first PDU session, wherein different data flows with the same transmission manner correspond to the same transmission parameters.

Optionally, the second transmission indication information may be an access network assistance indicator (AN-assistance indicator) or a radio access network assistance indicator (RAN-assistance indicator). The transmission parameters corresponding to the split transmission manner indicate split ratios of data of the first PDU session on transmission paths corresponding to the first access network device and the second access network device. The transmission parameters corresponding to the path selection transmission manner indicate a target transmission path for data of the first PDU session, wherein the target transmission path is one of two transmission paths corresponding to the first access network device and the second access network device.

Optionally, when the transmission manner is a redundant transmission manner, that is, the first transmission indication information indicates that the transmission manner of data of the first PDU session is a redundant transmission manner, the second transmission indication information indicates that the UPF determines, based on the transmission assistance information of the first access network device and the second access network device, whether to enable or stop the redundant transmission manner for transmitting data of the first PDU session. For example, the data of the first PDU session is a first data flow in the first PDU session. When the transmission reliability in the transmission assistance information is relatively poor, the UPF enables the redundant transmission manner for the first data flow. When the transmission reliability in the transmission assistance information is relatively good, the UPF disables or stops the redundant transmission manner for the first data flow.

Optionally, the SMF may further send a split rule or a transmission path selection rule to the UPF. The split rule indicates a correspondence between transmission assistance information and split ratios. The transmission path selection rule indicates how to select a target transmission path based on the transmission assistance information. For example, if the transmission manner indicated by the first transmission indication information is a split transmission manner, the SMF sends the split rule to the UPF. If the transmission manner indicated by the first transmission indication information is a path selection transmission manner, the SMF sends the path selection rule to the UPF. Optionally, the split rule or the transmission path selection rule may be sent through a separate message, or may be sent together with the transmission indication information through one message.

Optionally, when the SMF determines that the transmission paths corresponding to the first access network device and the transmission path corresponding to the second access network device are associated with the first PDU session of the terminal, the SMF sends the transmission indication information to the UPF.

Step 605: The first access network device and the second access network device separately send transmission assistance information to the UPF.

Optionally, after receiving the reporting indication information, the first access network device may periodically send the transmission assistance information. Similarly, after receiving the reporting indication information, the second access network device may periodically send the transmission assistance information. In this way, the UPF can adjust the transmission parameters in a timely manner based on the received transmission assistance information. For example, the UPF can adjust the split ratios of data of the first PDU session on the transmission paths corresponding to the first access network device and the second access network device in a timely manner, or adjust the target transmission path of the data of the first PDU session in a timely manner. In this way, the performance of the transmission decision can be improved, and the transmission performance can be improved.

If in steps 603a and 603b, the SMF sends the reporting frequency indication information to the first access network device and the second access network device, then the first access network device and the second access network device may send the transmission assistance information according to the reporting frequency indicated by the received reporting frequency indication information.

Optionally, the first access network device and the second access network device may send the transmission assistance information to the UPF through an N3 tunnel. The N3 tunnel uses access network (AN) tunnel information (Tunnel Info) and core network (CN) tunnel information (Tunnel Info) as tunnel addresses. The UPF may determine, based on the tunnel addresses of the received transmission assistance information, which access network device the received transmission assistance information is from.

Step 606: The UPF determines, based on the received transmission assistance information, the transmission parameters corresponding to the transmission manner of the data of the first PDU session.

Optionally, the UPF may determine, based on the received transmission assistance information, the transmission parameters corresponding to the transmission manner of the data of the first PDU session, when the UPF receives the transmission indication information. Alternatively, the UPF may determine, based on the received transmission assistance information, the transmission parameters corresponding to the transmission manner of the data of the first PDU session, after receiving the transmission assistance information sent by the first access network device and the second access network device. This is not limited in this application.

The first PDU session comprises at least one data flow, and the at least one data flow comprises a first data flow; and the data of the first PDU session comprises the first data flow.

In a possible implementation, the UPF determines transmission parameters corresponding to the transmission manner of the first data flow in the first PDU session. In other words, the UPF may determine transmission parameters corresponding to a transmission manner of a data flow in the first PDU session. Optionally, the transmission parameters corresponding to a transmission manner of a data flow in the first PDU session may be indicated to the UPF by using the data flow identifier.

In another possible implementation, the UPF separately determines transmission parameters corresponding to transmission manners of a plurality of data flows in the first PDU session. In other words, the UPF may determine transmission parameters corresponding to transmission manners of a plurality of data flows in the first PDU session, and transmission parameters of different data flows having the same transmission manner may be different. Optionally, the UPF may indicate, by using the data flow identifier, transmission parameters corresponding to transmission manners of specific data flows in the first PDU session. For example, the first PDU session includes the first data flow and the second data flow in the split transmission manner. The UPF determines that the split ratios of the first data flow are the first split ratio, and determines that the split ratios of the second data flow are the second split ratio. For another example, the first PDU session includes the first data flow and the second data flow in the path selection transmission manner. The UPF determines that the target transmission path of the first data flow is the first transmission path corresponding to the first access network device, and determines that the target transmission path of the second data flow is the second transmission path corresponding to the second access network device.

In another possible implementation, the UPF determines, by using a PDU session granularity, the transmission parameters corresponding to the transmission manner of the data of the first PDU session. In other words, the UPF may determine same transmission parameters for data flows in the same transmission manner. For example, the first PDU session includes a first data flow and a second data flow in the split transmission manner, the UPF determines a first split ratio, and both the first data flow and the second data flow are transmitted on different transmission paths based on the first split ratio. For another example, the first PDU session includes the first data flow and the second data flow in the path selection transmission manner, the UPF determines a first target transmission path, and both the first data flow and the second data flow are transmitted by using the first target transmission path.

In a possible implementation, if the transmission manner indicated by the first transmission indication information received in step 604 is the split transmission manner, In step 606, the UPF determines, based on the received transmission assistance information, the split ratios of the data of the first PDU session on the transmission path corresponding to the first access network device and the second access network device. If the transmission manner indicated by the first transmission indication information received in step 604 is the path selection transmission manner, the UPF determines, in step 606, the target transmission path of the data of the first PDU session based on the received transmission assistance information. The target transmission path is one of a transmission path corresponding to the first access network device and a transmission path corresponding to the second access network device.

For example, the split transmission manner is used as an example. If the UPF determines, based on the received transmission assistance information, that the signalling status of the first access network device is relatively good, the load is relatively low, or the air interface transmission delay is relatively low. In this case, a higher split ratio may be allocated to the transmission path corresponding to the first access network device, so that the UPF can send more data to the N3 tunnel corresponding to the first access network node. If the UPF determines, based on the received transmission assistance information, that the transmission rate of the first access network device is greater than the transmission rate of the second access network device, the UPF may allocate a higher split ratio to the transmission path corresponding to the first access network device.

In a possible implementation, the UPF may determine, based on the received transmission assistance information and the received split rule, split ratios of the data of the first PDU session on the transmission paths corresponding to the first access network device and the second access network device. Alternatively, the UPF may determine the target transmission path of the data of the first PDU session based on the received transmission assistance information and the path selection rule. The split rule indicates a correspondence between the transmission assistance information and the split ratios. The transmission path selection rule indicates how to select a target transmission path based on the transmission assistance information.

In a possible implementation, the UPF determines, based on the received transmission assistance information and the capability information of the terminal, the transmission parameters corresponding to the transmission manner of the data of the first PDU session. The capability information of the terminal indicates the air interface transmission capability of the terminal on the first access network device and the second access network device. The air interface transmission capability may include a multi-antenna capability, a bandwidth capability, a transmit power capability, and the like. For example, taking the split transmission manner as an example, if the UPF determines, based on the capability information of the terminal, that the air interface capability between the terminal and the first access network device is stronger than the air interface capability between the terminal and the second access network device, then the UPF may allocate a first percentage value to the transmission path corresponding to the first access network device, and allocate a second percentage value to the transmission path corresponding to the second access network device, wherein the first percentage value is greater than the second percentage value, and the sum of the first percentage value and the second percentage value is equal to 1.

Optionally, the SMF may send the capability information of the terminal to the UPF. Optionally, the terminal may send its capability information to the AMF, and the AMF sends the capability information to the SMF.

In a possible implementation, the UPF determines the transmission parameters corresponding to the transmission manner of the data of the first PDU session based on the received transmission assistance information, the capability information of the first access network device, and the capability information of the second access network device. The capability information of the first access network device may be a multi-antenna capability, a bandwidth capability, a transmit power capability, a transmission rate capability, or a supported access technology type. The access technology type may be 5G new radio (new radio, NR), 5G new radio (satellite), or a future communications network. For example, the split transmission manner is used as an example. If the UPF determines, based on the capability information of the first access network device and the capability information of the second access network device, that the capability of the first access network device is stronger than that of the second access network device, the UPF may allocate a first percentage value to a transmission path corresponding to the first access network device, and allocate a second percentage value to a transmission path corresponding to the second access network device, wherein the first percentage value is greater than the second percentage value, and the sum of the first percentage value and the second percentage value is equal to 1. The AMF separately obtains the capability information of the first access network device and the capability information of the second access network device through interfaces between the AMF and the first access network device and between the AMF and the second access network device. In step 602, the AMF sends the capability information of the first access network device and the capability information of the second access network device to the SMF. In step 604, the SMF sends the capability information of the first access network device and the capability information of the second access network device to the UPF.

In a possible implementation, the UPF determines, based on the received assistance information and the measurement information, the transmission parameters corresponding to the transmission manner of the data of the first PDU session. The measurement information may include measurement information obtained through RTT measurement and/or measurement information obtained through PER measurement. For example, the UPF may perform RTT measurement to obtain a loopback delay between the UPF and the terminal, and perform PER measurement to obtain a packet error rate between the UPF and the terminal. Then, the UPF determines, based on the received transmission assistance information and the measured loopback delay and/or packet error rate, the transmission parameters corresponding to the transmission manner of the data of the first PDU session.

It can be understood that the UPF may determine, based on the received transmission assistance information, and in combination with at least one of the capability information of the terminal, the measurement information, the capability information of the first access network device, and the capability information of the second access network device, the transmission parameters corresponding to the transmission manner of the data of the first PDU session.

Optionally, when the transmission manner is a redundant transmission manner, step 606 is replaced with: In a case where the UPF receives transmission indication information, the UPF determines, based on the received transmission assistance information, to use the redundant transmission manner to transmit the data of the first PDU session. For example, if the signalling status of the first access network device and the signalling status of the second access network device are both relatively poor, it is determined to use the redundant transmission manner to transmit the data of the first PDU session. For example, if the transmission reliability between the first access network device and the terminal and the transmission reliability between the second access network device and the terminal are both relatively poor, it is determined to use the redundant transmission manner to transmit the data of the first PDU session. Further, taking an example in which the data of the first PDU session is the first data flow in the first PDU session, when the transmission reliability in the transmission assistance information is relatively poor, the UPF determines to enable the redundant transmission manner to transmit the first data flow. When the transmission reliability in the transmission assistance information is relatively good, the UPF determines to disable or stop the redundant transmission manner for transmitting the first data flow.

Step 607: The UPF transmits the data of the first PDU session based on the determined transmission parameters.

The UPF may perform, based on the split ratios indicated by the transmission parameters corresponding to the split transmission manner, split transmission on the data of the first PDU session on the downlink transmission path corresponding to the first access network device and the second access network device. Alternatively, select, based on the path, a target downlink transmission path indicated by a transmission parameters corresponding to the transmission manner, and transmit the data of the first PDU session on the target downlink transmission path.

In the split transmission manner, in a possible implementation, the UPF performs data transmission based on the split ratios at a granularity of a session. In other words, the UPF transmits each data flow (or QoS flow) in the first PDU session on a plurality of transmission paths based on same split ratios. Correspondingly, in step 606, the UPF determines the split ratios for all data flows in the first PDU session based on the received transmission assistance information. The split ratios are split ratios of each data flow on the transmission paths corresponding to the first access network device and the second access network device. In step 607, the UPF performs, for each data flow included in the first PDU session, split transmission on the downlink transmission paths corresponding to the first access network device and the second access network device based on the split ratios.

In the split transmission manner, in another possible implementation, the UPF performs data transmission based on the split ratios at a granularity of a data flow in a PDU session. In other words, different data flows in the first PDU session each have their own split ratios, and the split ratios of the different data flows may be different. Correspondingly, in step 606, the UPF, based on the received transmission assistance information, separately determines, for each data flow included in the first PDU session, split ratios of each data flow on transmission paths corresponding to the first access network device and the second access network device. The split ratios of the different data flows may be different. In step 607, the UPF, for each data flow included in the first PDU session, performs split transmission on downlink transmission paths corresponding to the first access network device and the second access network device according to the respective split ratios. For example, the first PDU session includes a first data flow and a second data flow, split ratios of the first data flow are the first split ratio, split ratios of the second data flow are the second split ratio, and the first split ratio and the second split ratio are different. The UPF performs transmission of the first data flow on the transmission path corresponding to the first access network device and the second access network device according to the first split ratio, and performs transmission of the second data flow on the transmission path corresponding to the first access network device and the second access network device according to the second split ratio.

In the path selection transmission manner, in a possible implementation, the UPF performs data transmission based on the target transmission path at a granularity of a session. In other words, all data flows in the first PDU session are transmitted by using the same target transmission path. Correspondingly, in step 606, the UPF determines the target transmission path for the first PDU session (or for all data flows in the first PDU session) based on the received transmission assistance information. In step 607, the UPF performs transmission for the first PDU session (or for all data flows in the first PDU session) based on the target transmission path, that is, transmits all data flows in the first PDU session on the target transmission path.

In the path selection transmission manner, in another possible implementation, the UPF performs data transmission based on the target transmission path at a granularity of a data flow in a session. In other words, each data flow in the first PDU session is transmitted by using a respective target transmission path. Correspondingly, in step 606, the UPF separately determines a target transmission path of each data flow for each data flow in the first PDU session based on the received transmission assistance information. Different data flows may have different target transmission paths. In step 607, the UPF performs transmission for each data flow in the first PDU session based on a target transmission path of each data flow. For example, the first PDU session includes a first data flow and a second data flow, and a target transmission path of the first data flow is the first path (the first path is a transmission path corresponding to the first access network device), the target transmission path of the second data flow is the second path (the second path is a transmission path corresponding to the second access network device). The UPF transmits the first data flow on the first path, and transmits the second data flow on the second path.

In a possible implementation, the "all data flows in the first PDU session" may be replaced with "one or more specified data flows in the first PDU session." In other words, the UPF determines the split ratios or the target transmission path for only some of the data flows in the first PDU session.

In a possible implementation, the SMF may indicate the UPF to use which of the foregoing methods to perform data transmission. For example, the SMF indicates the UPF to perform data transmission based on split ratios at a granularity of a session, or indicates the UPF to perform data transmission based on split ratios at a granularity of a data flow in a PDU session, or indicates the UPF to perform data transmission based on a target transmission path at a granularity of a session, or indicates the UPF to perform data transmission based on a target transmission path at a granularity of a data flow in a session. For example, in step 604, the SMF may indicate the UPF to use which of the foregoing methods to perform data transmission. The SMF may indicate the UPF to perform data transmission based on split ratios at a granularity of a session, or indicate the UPF to perform data transmission based on split ratios at a granularity of a data flow in a PDU session, or indicate the UPF to perform data transmission based on a target transmission path at a granularity of a session, or indicate the UPF to perform data transmission based on a target transmission path at a granularity of a data flow in a session. This application does not limit the implementation of the foregoing indication information by the SMF.

In a possible implementation, the first PDU session includes a first data flow and a second data flow. The transmission manner of the first data flow is a split transmission manner, and the transmission manner of the second data flow is a path selection transmission manner. The UPF, for the first data flow, based on the split ratios of the first data flow on the transmission path corresponding to the first access network device and the transmission path corresponding to the second access network device, transmits the first data flow through the transmission path corresponding to the first access network device and the transmission path corresponding to the second access network device. The UPF, for the second data flow, based on the target transmission path corresponding to the second data flow, transmits the first data flow on the target transmission path. In other words, if different transmission manners are used for different data flows in the same PDU session, the UPF performs different processing operations for the different data flows. The transmission assistance information sent by the first access network device and the second access network device can be used to determine both the split ratios and the target transmission path.

Optionally, when the transmission manner is the redundant transmission manner, step 607 is replaced with: The UPF performs, based on the determination of starting or stopping the redundant transmission manner, transmission of the data of the first PDU session. For example, when the UPF determines to enable the redundant transmission manner to transmit the data of the first PDU session, the UPF separately transmits the data of the first PDU session on transmission paths corresponding to the first access network device and the second access network device. To be specific, same data is transmitted on transmission paths corresponding to the first access network device and the second access network device. Further, that the data of the first PDU session is the first data flow in the first PDU session is used as an example. When the UPF determines to enable the redundant transmission manner to transmit the first data flow, the UPF separately transmits same data of the first data flow on transmission paths corresponding to the first access network device and the second access network device.

It may be understood that the time sequence relationship of the steps in the procedure shown in FIG. 6 is merely an example, and the time sequence relationship of the steps is not limited in this embodiment of this application. For example, in some other examples, step 604 is performed before steps 603a and 603b. In other words, the SMF first sends the transmission indication information to the UPF, and then sends the reporting indication information to the first access network device and the second access network device. Alternatively, step 604, step 603a, and step 603b are simultaneously performed. In other words, the SMF sends the transmission indication information to the UPF, and sends the reporting indication information to the first access network device and the second access network device.

In the process shown in FIG. 6 above, the UPF determines, based on the transmission assistance information sent by the access network device, the split ratios of the data of the PDU session on different transmission paths in the split transmission manner, or determines the target transmission path of the data of the PDU session in the path selection transmission manner. By having the access network device provide the transmission assistance information to the UPF, compared to the UPF performing PMF measurement to obtain the transmission performance between the UPF and the terminal, this can reduce latency, improve reliability, and also enhance real-time performance, thereby improving decision-making performance.

Referring to FIG. 7, it shows a communication method according to an embodiment of this application. In this method, when the first access network device and the second access network device are connected to different AMFs, the access network device sends transmission assistance information to the UPF based on the reporting indication information sent by the SMF. This enables the UPF to make a decision on the split ratios or on the transmission path of the data flow based on the transmission assistance information received from different access network devices.

As shown in FIG. 7, the procedure may include the following steps:
Step 701: The terminal sends a PDU session establishment request message to a first AMF by using a first access network device, to request to establish a first PDU session. The terminal sends a PDU session establishment request message to a second AMF by using a second access network device, to request to establish the first PDU session.

The message includes an MA PDU request (MA PDU request) and an identifier of the first PDU session. The MA PDU request indicates that the data of the first PDU session is transmitted by at least two access network devices. Alternatively, the MA PDU request indicates that the data of the first PDU session is transmitted on a transmission path corresponding to at least two access network devices. In other words, when the terminal requests to establish the first PDU session, the following steps of the procedure shown in FIG. 7 may be triggered to be performed.

Optionally, when the terminal requests to modify the first PDU session, it may also trigger the execution of the following steps of the procedure shown in FIG. 7. Correspondingly, in this case, the PDU session establishment request message sent by the terminal may be replaced with a PDU session modification request message.

The above merely provides examples illustrating the following steps of triggering the procedure shown in FIG. 7 by using a PDU session establishment request message or a PDU session modification request message. It can be understood that the following steps may alternatively be triggered by using another message or event. This is not limited in the embodiments of this application.

Step 702a and 702b: The first AMF sends a PDU session context establishment request message to the SMF, which includes an MA PDU request. The second AMF sends a PDU session context establishment request message to the SMF, which includes an MA PDU request.

Optionally, the PDU session context establishment request message may further include access type (access type) information and radio access technology (radio access technology, RAT) type information. The access type and the RAT type are attributes of a wireless access device, and a combination of the access type and the RAT type can identify an access network device. Optionally, the access type information indicates 3GPP access or non-3GPP access, and the RAT type information indicates NR access or future communications network access.

Optionally, the PDU session context request message may further include an identifier of the first PDU session.

Step 703a and 703b: The SMF separately sends reporting indication information to the first access network device and the second access network device.

Optionally, when determining that the data of the first PDU session of the terminal can be transmitted on the transmission path corresponding to the first access network device and the transmission path corresponding to the second access network device, the SMF separately sends reporting indication information to the first access network device and the second access network device. Optionally, the SMF may determine, based on the access type information and the RAT type information included in the received PDU session context establishment request message, that the data of the first PDU session of the terminal can be transmitted on the transmission path corresponding to the first access network device and the transmission path corresponding to the second access network device. Alternatively, the data of the first PDU session of the terminal can be transmitted on the transmission path corresponding to the first access network device and the transmission path corresponding to the second access network device, or the transmission path corresponding to the first access network device and the transmission path corresponding to the second access network device are associated with the first PDU session of the terminal.

The SMF may send the reporting indication information to the first access network device by using the first AMF, and send the reporting indication information to the second access network device by using the second AMF. Optionally, the SMF may send a session container (N2 SM information) to the first access network device by using the first AMF. The container includes the reporting indication information. The SMF may send a session container (N2 SM information) to the second access network device by using the second AMF. The container includes the reporting indication information. In a possible implementation, in step 702a, the first AMF may send, to the SMF, the identifier of the first access network device associated with the identifier of the first PDU session. In step 702b, the second AMF sends, to the SMF, the identifier of the second access network device associated with the identifier of the first PDU session. In this way, in step 703a, the SMF may send, to the first AMF, the reporting indication information used to be sent to the first access network device, so that the first AMF sends the reporting indication information to the first access network device. In step 703b, the SMF may send, to the second AMF, the reporting indication information used to send the second access network device, so that the second AMF sends the reporting indication information to the second access network device. It should be understood that a specific implementation in which the SMF sends the reporting indication information to the first access network device by using the first AMF and sends the reporting indication information to the second access network device by using the second AMF is not limited in this application.

In a possible implementation, the reporting indication information sent by the SMF to the first access network device and the second access network device may be the same, and both are used to indicate to send the transmission assistance information. In another possible implementation, the reporting indication information sent by the SMF to the first access network device may be different from the reporting indication information sent by the SMF to the second access network device. For example, the reporting indication information sent by the SMF to the first access network device indicates that the first access network device sends the transmission assistance information. The reporting indication information sent by the SMF to the second access network device indicates that the second access network device to send the transmission assistance information. The transmission assistance information of the two access network devices indicates transmission performance of the transmission paths corresponding to the two access network devices, wherein the transmission assistance information of the first access network device indicates transmission performance of the transmission path corresponding to the first access network device, and the transmission assistance information of the second access network device indicates performance of the transmission path corresponding to the second access network device.

Optionally, the reporting indication information further indicates that the access network device sends the transmission assistance information to the UPF. For example, the reporting indication information may indicate the access network device to send the transmission assistance information for downlink transmission control, or indicate an identifier or an address of the UPF, or indicate a type of a target network element for transmitting the assistance information, so that the access network device may determine to send the transmission assistance information to the UPF. Correspondingly, the first access network device and the second access network device send the transmission assistance information to the UPF based on the received reporting indication information.

Optionally, the SMF may further send the reporting frequency indication information to the first access network device. The first access network device sends the transmission assistance information to the UPF according to the reporting frequency indicated by the reporting frequency indication information. Similarly, the SMF may further send the reporting frequency indication information to the second access network device. The second access network device sends the transmission assistance information to the UPF according to the reporting frequency indicated by the reporting frequency indication information. The reporting frequency indication information may specifically indicate a quantity of times of reporting per second, or indicate a quantity of times of reporting every several seconds. Optionally, the reporting frequency indication information may be included in the reporting indication information for sending, or may be sent through a separate message.

Step 704: The SMF sends transmission indication information to the UPF. The transmission indication information includes first transmission indication information, and the first transmission indication information indicates a transmission manner of data of a first PDU session. The transmission manner may be a split transmission manner, a path selection transmission manner, or a redundancy transmission manner (or referred to as a redundancy transmission manner)).

Optionally, the SMF may further send the split rule or the path selection rule to the UPF. For example, if the first transmission indication information indicates that the transmission manner of the data of the first PDU session is the split transmission manner, the SMF sends the split rule to the UPF. If the first transmission indication information indicates that the transmission manner of the data of the first PDU session is the path selection transmission manner, the SMF sends the path selection rule to the UPF.

Step 705: The first access network device and the second access network device separately send transmission assistance information to the UPF.

Step 706: The UPF determines, based on the received transmission assistance information, transmission parameters corresponding to the transmission manner of the data of the first PDU session.

Step 707: The UPF transmits the data of the first PDU session based on the determined transmission parameters.

The specific implementation methods of the above steps 704 to 707 can refer to the relevant descriptions in the procedure shown in FIG. 6.

It can be understood that the time sequence relationship between the steps in the procedure shown in FIG. 7 is merely an example, and the time sequence relationship of the steps is not limited in the embodiments of this application.

Referring to FIG. 8, FIG. 8 shows a communication method according to an embodiment of this application. In this method, when a first access network device and a second access network device are connected to the same AMF, the access network device sends transmission assistance information to the terminal based on the reporting indication information sent by the SMF. In this way, the terminal can make a decision on split ratios or a transmission path of a data flow based on the transmission assistance information received from different access network devices.

As shown in FIG. 8, the procedure may include the following steps:
Step 801: The terminal separately sends, to the AMF by using the first access network device and the second access network device, a PDU session establishment request message, to request establishment of a first PDU session.

The specific implementation of this step may refer to step 601 in FIG. 6.

Step 802: The AMF sends a PDU session context establishment request message to the SMF, wherein the message includes the MA PDU request. Optionally, the PDU session context establishment request message may further include an identifier of the first PDU session.

The specific implementation of this step can refer to step 602 in FIG. 6.

Steps 803a and 803b: The SMF separately sends reporting indication information to the first access network device and the second access network device.

The specific implementation of this step can refer to step 603a and step 603b in FIG. 6.

In a possible implementation, the reporting indication information indicates the access network device to send the transmission assistance information to the terminal. For example, the reporting indication information may indicate the access network device to send the transmission assistance information for uplink transmission control, or indicate an identifier of the terminal, or indicate a type of a target device for the transmission assistance information, so that the access network device can determine to send the transmission assistance information to the terminal. Correspondingly, the first access network device and the second access network device send the transmission assistance information to the terminal based on the received reporting indication information.

Step 804: The SMF sends transmission indication information to the terminal. The transmission indication information includes first transmission indication information, and the first transmission indication information indicates a transmission manner of data of a first PDU session. The transmission manner is a split transmission manner, a path selection transmission manner, or a redundancy transmission manner.

The specific implementation method of this step can refer to step 604 in FIG. 6. That is, the UPF in step 604 is replaced with the terminal, thereby obtaining the specific implementation method of step 804.

Step 805a and 805b: The first access network device and the second access network device separately send transmission assistance information to the terminal.

Optionally, the first access network device and the second access network device may send the transmission assistance information to the terminal by using an RRC message.

The specific implementation method of this step can refer to step 605 in FIG. 6. That is, the UPF in step 605 is replaced with the terminal, thereby obtaining the specific implementation method of step 805.

Step 806: The terminal determines, based on the received transmission assistance information, transmission parameters corresponding to the transmission manner of the data of the first PDU session.

In this step, a specific implementation that the terminal determines, based on the received transmission assistance information, the transmission parameters corresponding to the transmission manner of the data of the first PDU session, may refer to a specific implementation in FIG. 6 in which the UPF determines, based on the received transmission assistance information, the transmission parameters corresponding to the transmission manner of the data of the first PDU session.

Step 807: The terminal transmits the data of the first PDU session based on the determined transmission parameters.

The terminal may perform, based on the split ratios indicated by the transmission parameters corresponding to the split transmission manner, split transmission of the data of the first PDU session on the uplink transmission paths corresponding to the first access network device and the second access network device, or perform, based on the target uplink transmission path indicated by the transmission parameters corresponding to the split transmission manner, transmission of the data of the first PDU session on the target uplink transmission path.

In a possible implementation, the terminal may perform data transmission at a granularity of a session according to split ratios or a target transmission path of data. Alternatively, the terminal may perform data transmission at a granularity of a data flow in a PDU session according to split ratios or a target transmission path of data. A specific implementation is similar to an operation of the UPF in the procedure shown in FIG. 6, which is not repeated herein.

Optionally, when the transmission manner is a redundant transmission manner, step 807 is replaced with: The terminal performs data transmission for the first PDU session based on determining to enable or disable the redundant transmission manner. For example, when the terminal determines to enable the redundant transmission manner to perform data transmission for the first PDU session, the terminal separately performs data transmission for the first PDU session on the transmission paths corresponding to the first access network device and the second access network device, that is, the same data is transmitted on the transmission paths corresponding to the first access network device and the second access network device. Further, using an example in which the data of the first PDU session is the first data flow in the first PDU session, when the terminal determines to enable the redundant transmission manner to perform data transmission for the first data flow, the terminal separately performs data transmission for the same data of the first data flow on the transmission paths corresponding to the first access network device and the second access network device.

It may be understood that the time sequence relationship of the steps in the procedure shown in FIG. 8 is only an example, and the time sequence relationship of the steps is not limited in the embodiments of this application.

FIG. 9 shows a communication method according to an embodiment of this application. In the method, when the first access network device and the second access network device are connected to different AMFs, the access network device sends the transmission assistance information to the terminal based on the reporting indication information sent by the SMF, so that the terminal make a decision on split ratios or a transmission path of a data flow based on the transmission assistance information received from different access network devices.

As shown in FIG. 9, the procedure may include the following steps.

Step 901: A terminal sends a PDU session establishment request message to a first AMF by using a first access network device, to request to establish a first PDU session. The terminal sends a PDU session establishment request message to a second AMF by using a second access network device, to request to establish the first PDU session.

The specific implementation manner of this step may refer to step 701 in FIG. 7.

Step 902a and 902b: The first AMF sends a PDU session context establishment request message to the SMF. The message includes an MA PDU request and access type indication information. The second AMF sends a PDU session context establishment request message to the SMF. The message includes an MA PDU request.

The specific implementation method of this step can refer to step 702 in FIG. 7.

Step 903a and 903b: The SMF separately sends reporting indication information to the first access network device and the second access network device.

The specific implementation method of this step can refer to step 703a and step 703b in FIG. 7. In other words, the UPF in steps 703a and 703b is replaced with a terminal, and a specific implementation method of steps 903a and 903b can be obtained.

Step 904: The SMF sends transmission indication information to the terminal. The transmission indication information includes first transmission indication information, and the first transmission indication information indicates a transmission manner of data of a first PDU session. The transmission manner is a split transmission manner, a path selection transmission manner, or a redundant transmission manner.

The specific implementation of this step may refer to step 804 in FIG. 8.

Step 905a and 905b: The first access network device and the second access network device respectively send transmission assistance information to the terminal.

The specific implementation of this step may refer to steps 805a and 805b in FIG. 8.

Step 906: The terminal determines, based on the received transmission assistance information, the transmission parameters corresponding to the transmission manner of the data of the first PDU session.

The specific implementation of this step may refer to step 806 in FIG. 8.

Step 907: The terminal transmits the data of the first PDU session based on the determined transmission parameters.

The specific implementation of this step may refer to step 807 in FIG. 8.

It may be understood that the time sequence relationship of the steps in the procedure shown in FIG. 9 is merely an example, and the time sequence relationship of the steps is not limited in the embodiments of this application.

In some embodiments of this application, the N access network devices may send respective transmission assistance information to a session management function entity in a core network, and the session management function entity may determine the split ratios of data or the target transmission path of the data based on the transmission assistance information of the N access network devices, and indicate the determined split ratios or the target transmission path to the first device, so that the first device can control data transmission based on the split ratios or the target transmission path. The first device may include a terminal and/or a user plane function entity.

The following describes the foregoing method with reference to FIG. 10 and FIG. 11. In the procedures shown in FIG. 10 and FIG. 11, the terminal is connected to the user plane function entity by using the N access network devices. In other words, the terminal has transmission paths corresponding to the N access network devices, or the transmission paths corresponding to the N access network devices are associated with one session (for example, the first PDU session) of the terminal. FIG. 10 describes a process in which the session management function entity determines split ratios of data or a target transmission path of the data based on transmission assistance information of the N access network devices when the N access network devices are connected to the same access and mobility management function entity; FIG. 11 describes a process in which the session management function entity determines split ratios of data or a target transmission path of the data based on transmission assistance information of the N access network devices when the N access network devices are connected to different access and mobility management function entities.

To simplify the description, in the processes shown in FIG. 10 and FIG. 11, all are based on the system architecture shown in FIG. 1, and use the control plane network function entity including the SMF and the AMF as an example. The user plane function entity is used as the UPF as an example. Moreover, the quantity N of access network devices is 2, that is, the access network devices include a first access network device and a second access network device are used as an example for description. In the processes shown in FIG. 10 and FIG. 11, the terminal is connected to the UPF through the first access network device and the second access network device. In other words, the terminal has two transmission paths corresponding to the access network devices. In other words, the transmission paths corresponding to the first access network device and the second access network device are associated with the first PDU session of the terminal. In other words, the first PDU session is established on the first access network device and the second access network device. The SMF is configured to manage the first PDU session of the terminal. The UPF, the first access network device, and the second access network device are configured to transmit data of the first PDU session.

Refer to FIG. 10, which is a communication method according to an embodiment of this application. In the method, in a case in which the first access network device and the second access network device are connected to the same AMF, the SMF makes a decision on split ratios or a transmission path of a data flow based on transmission assistance information sent by the access network device.

As shown in FIG. 10, the procedure may include the following steps:
Step 1001: The terminal separately sends a PDU session establishment request message to the AMF through the first access network device and the second access network device, to request to establish the first PDU session.

The specific implementation method of this step can refer to step 601 in FIG. 6.

Step 1002: The AMF sends a PDU session context establishment request message to the SMF. This message includes an MA PDU request, and optionally may further include an identifier of the first PDU session.

The specific implementation method of this step can refer to step 602 in FIG. 6.

Step 1003a and 1003b: The SMF separately sends reporting indication information to the first access network device and the second access network device.

The specific implementation of this step can refer to steps 603a and 603b in FIG. 6.

In a possible implementation, the reporting indication information sent by the SMF to the first access network device indicates that the first access network device sends transmission assistance information to the SMF. The reporting indication information sent by the SMF to the second access network device indicates that the second access network device sends transmission assistance information to the SMF.

Step 1004a: The SMF sends transmission indication information to the UPF. The transmission indication information includes third transmission indication information, and the third transmission indication information indicates that the data of the first PDU session is transmitted based on the received transmission parameters.

In a possible implementation, the transmission indication information further includes fourth transmission indication information, and the fourth transmission indication information indicates a transmission manner of the data of the first PDU session. For example, the fourth transmission indication information indicates that the transmission manner of the first PDU session is a split transmission manner, or a path selection transmission manner, or a redundant transmission manner. For a type of the transmission manner, refer to the foregoing descriptions, and details are not described herein again.

For example, the first PDU session includes at least one data flow, and the at least one data flow includes a first data flow. The data of the first PDU session includes the first data flow. Correspondingly, the fourth transmission indication information may indicate a transmission manner of the first data flow in the first PDU session.

For another example, the first PDU session includes multiple data flows, and the fourth transmission indication information may indicate transmission manners of the multiple data flows. The transmission manners of the multiple data flows may be the same or may be different. For example, the first transmission indication information indicates that the first data flow in the first PDU session is in a split transmission manner, and indicates that the second data flow in the first PDU session is in a path selection transmission manner. This is not limited in this application.

In a possible implementation, when the transmission manner is a redundant transmission manner, that is, the fourth transmission indication information indicates that a transmission manner of the data of the first PDU session is a redundant transmission manner, the third transmission indication information indicates to enable or stop the redundant transmission manner for transmitting the data of the first PDU session based on received transmission parameters corresponding to the redundant transmission manner. This is not limited in this application.

In a possible implementation, the third transmission indication information indicates that, for a first data flow in the first PDU session, transmission is performed based on received transmission parameters corresponding to a transmission manner of the first data flow.

In another possible implementation, the third transmission indication information indicates that, for a plurality of data flows (for example, may be each data flow) in the first PDU session, transmission is performed based on transmission parameters corresponding to a transmission manner of each data flow in the plurality of data flows.

In another possible implementation, the third transmission indication information indicates that transmission of each data flow in the first PDU session is performed based on received transmission parameters at a granularity of a PDU session. For example, a transmission manner of all data flows in the first PDU session is a path selection transmission manner, and transmission parameters received by the UPF indicate a target transmission path. In this case, all data flows in the first PDU session are transmitted through the target transmission path. For another example, a transmission manner of all data flows in the first PDU session is a split transmission manner, and transmission parameters received by the UPF indicate split ratios. In this case, all data flows in the first PDU session are transmitted through different transmission paths according to the split ratio. For another example, the first PDU session includes M data flows with a split transmission manner and N data flows with a path selection transmission manner, and the transmission parameters received by the UPF includes: indicating a target transmission path and split ratios. In this case, all the M data flows in the first PDU session are transmitted through different transmission paths according to the split ratios. All the N data flows in the first PDU session are transmitted through the target transmission path.

In a possible implementation, the SMF may obtain, from the PCF, information about a transmission manner of data of the first PDU session, and then configure, for the UPF by using transmission indication information, the transmission manner of the data of the first PDU session.

Optionally, the PCF or the SMF determines, based on a requirement for the data of the first PDU session, the transmission manner of the data of the first PDU session. For example, the data of the first PDU session includes a first data flow. If a transmission rate requirement of the first data flow is relatively high, it is determined that the transmission manner of the first data flow is a split transmission manner. If a transmission reliability requirement of the first data flow is relatively high, it is determined that the transmission manner of the first data flow is a redundant transmission manner.

Optionally, when determining that the transmission path corresponding to the first access network device and the transmission path corresponding to the second access network device are associated with the first PDU session of the terminal, the SMF sends transmission indication information to the UPF. A specific implementation in which the SMF determines whether the transmission path corresponding to the first access network device and the transmission path corresponding to the second access network device are associated with the first PDU session of the terminal, may refer to the related content in the foregoing.

Step 1004b: The SMF sends transmission indication information to the terminal. The transmission indication information includes third transmission indication information, and the third transmission indication information indicates that the data of the first PDU session is to be transmitted according to the received transmission parameters.

Optionally, the transmission indication information further includes fourth transmission indication information. The fourth transmission indication information indicates a transmission manner of the data of the first PDU session. For example, it indicates that the transmission manner of the first PDU session is a split transmission manner, or a path selection transmission manner, or a redundant transmission manner.

Among them, the meanings and functions of the third transmission indication information and the fourth transmission indication information are similar to those of the corresponding transmission indication information in step 1004a.

Optionally, the SMF may obtain, from the PCF, information about a transmission manner of the data of the first PDU session, and then configure, for the terminal, the transmission manner of the data of the first PDU session by using the transmission indication information.

Optionally, the SMF may determine that the transmission path corresponds to the first access network device and the transmission path corresponds to the second access network device are associated with the first PDU session of the terminal, and then send transmission indication information to the terminal.

Step 1005: The first access network device and the second access network device separately send transmission assistance information to the SMF.

The specific implementation of this step may refer to step 605 in FIG. 6, except that the first access network device and the second access network device send the transmission assistance information to the SMF.

Step 1006: The SMF determines, based on the received transmission assistance information, transmission parameters corresponding to the transmission manner of the data of the first PDU session.

In this step, a specific implementation, in which the SMF determines transmission parameters corresponding to the transmission manner of the data of the first PDU session based on the received transmission assistance information, may refer to a specific implementation in FIG. 6 in which the UPF determines, based on the received transmission assistance information, the transmission parameters corresponding to the transmission manner of the data of the first PDU session.

Optionally, the SMF may determine, based on the received transmission assistance information, the transmission parameters corresponding to the transmission manner of the data of the first PDU session in the downlink direction and/or the transmission parameters corresponding to the transmission manner of the data of the first PDU session in the uplink direction. The split ratios corresponding to the split transmission manner of the data of the first PDU session in the downlink direction may be the same as the split ratios corresponding to the split transmission manner of the data of the first PDU session in the uplink direction, or certainly may be different. The target transmission path corresponding to the path selection transmission manner of the data of the first PDU session in the downlink direction may be the same as the target transmission path corresponding to the path selection transmission manner of the data of the first PDU session in the uplink direction, or certainly may be different.

Step 1007a: The SMF sends the determined transmission parameters to the UPF.

Optionally, the SMF sends the transmission parameters corresponding to the transmission manner of the data of the first PDU session in the downlink direction to the UPF.

Step 1007b: The SMF sends the determined transmission parameters to the terminal.

Optionally, the SMF sends the transmission parameters corresponding to the transmission manner of the data of the first PDU session in the uplink direction to the terminal.

Step 1008: The terminal and/or the UPF transmit the data of the first PDU session based on the received transmission parameters.

In this step, a specific implementation in which the terminal transmits data of the first PDU session based on the received transmission parameters, may refer to the related descriptions in FIG. 8. A specific implementation in which the UPF transmits data of the first PDU session based on the received transmission parameter, may refer to the related descriptions in FIG. 6.

Based on the aforementioned procedure, in a possible implementation, steps 1004b and 1007b may be omitted. That is, the SMF only indicates the UPF to perform data transmission based on the received transmission parameters, and sends the transmission parameters to the UPF. In another possible implementation, steps 1004a and 1007a may be omitted. That is, the SMF only indicates the terminal to perform data transmission based on the received transmission parameters, and sends the transmission parameters to the terminal.

It may be understood that the time sequence relationship between the steps in the procedure shown in FIG. 10 is merely an example. The time sequence relationship between the steps is not limited in the embodiments of this application.

Referring to FIG. 11, a communication method according to an embodiment of this application is provided. In this method, when the first access network device and the second access network device are connected to different AMFs, the SMF makes a decision on split ratios or a transmission path of a data flow based on transmission assistance information sent by the access network device.

As shown in FIG. 11, the procedure may include the following steps:
Step 1101: The terminal sends, to the first AMF by using the first access network device, a PDU session establishment request message, for requesting to establish a first PDU session. The terminal sends, to the second AMF by using the second access network device, a PDU session establishment request message, for requesting to establish a first PDU session.

The specific implementation of this step can refer to step 701 in FIG. 7.

Step 1102a and 1102b: The first AMF sends, to the SMF, a PDU session context establishment request message, which includes an MA PDU request. The second AMF sends, to the SMF, a PDU session context establishment request message, which includes an MA PDU request.

The specific implementation of this step may refer to steps 702a and 702b in FIG. 7.

Step 1103a and 1103b: The SMF separately sends reporting indication information to the first access network device and the second access network device.

The specific implementation of this step may refer to steps 1003a and 1003b in FIG. 10.

Step 1104a: The SMF sends transmission indication information to the UPF. The transmission indication information includes third transmission indication information, and the third transmission indication information indicates that the data of the first PDU session is to be transmitted according to the received transmission parameters.

Step 1104b: The SMF sends transmission indication information to the terminal. The transmission indication information includes third transmission indication information, and the third transmission indication information indicates that the data of the first PDU session is to be transmitted according to the received transmission parameters.

Step 1105: The first access network device and the second access network device separately send transmission assistance information to the SMF.

Step 1106: The SMF determines, based on the received transmission assistance information, the transmission parameters corresponding to the transmission manner of the data of the first PDU session.

Step 1107a: The SMF sends the determined transmission parameters to the UPF.

Step 1107b: The SMF sends the determined transmission parameters to the terminal.

Step 1108: The terminal and/or the UPF transmit the data of the first PDU session based on the received transmission parameters.

The specific implementations of the foregoing steps 1103a, 1104a, 1104b, step 1105, step 1106, step 1107a, step 1107b, and step 1108, may refer to specific implementations of related steps in FIG. 10.

Based on the foregoing procedure, in a possible implementation, step 1104b and step 1107b may be omitted. In other words, the SMF only indicates the UPF to perform data transmission based on the received transmission parameters, and sends the transmission parameters to the UPF. In another possible implementation, step 1104a and step 1107a may be omitted. In other words, the SMF only indicates the terminal to perform data transmission based on the received transmission parameters, and sends the transmission parameters to the terminal.

It may be understood that the time sequence relationship of the steps in the procedure shown in FIG. 11 is merely an example, and the time sequence relationship of the steps is not limited in the embodiments of this application.

In some embodiments of this application, the session management function entity may indicate the first access network device in the N access network devices to determine the split ratios of data or the target transmission path of the data based on the transmission assistance information of the N access network devices, and indicate the determined the split ratios and the target transmission path to the first device, or forward the determined the split ratios and the determined target transmission path to the first device by using the session management function entity, so that the first device can perform data transmission based on the received split ratios or the received target transmission path. The first device may include a terminal and/or a user plane function entity.

The following describes the foregoing method with reference to FIG. 12, FIG. 13, FIG. 14, and FIG. 15. In the procedures shown in FIG. 12, FIG. 13, FIG. 14, and FIG. 15, the terminal is connected to the user plane function entity by using the N access network devices, or the terminal has transmission paths corresponding to the N access network devices. In other words, transmission paths corresponding to the N access network devices are associated with one session (for example, the first PDU session) of the terminal. FIG. 12 describes a process in which a first access network device determines, for downlink transmission, split ratios of data or a target transmission path of data based on transmission assistance information of the N access network devices when the N access network devices are connected to the same access and mobility management function entity; FIG. 13 describes a process in which a first access network device determines, for downlink transmission, split ratios of data or a target transmission path of data based on transmission assistance information of the N access network devices when the N access network devices are connected to different access and mobility management function entities; FIG. 14 describes a process in which a first access network device determines, for uplink transmission, split ratios of data or a target transmission path of data based on transmission assistance information of the N access network devices when the N access network devices are connected to the same access and mobility management function entity; FIG. 15 describes a process in which the first access network device determines, for uplink transmission, split ratios of data or a target transmission path of the data based on transmission assistance information of the N access network devices when the N access network devices are connected to different access and mobility management function entities.

To simplify the description, in the processes shown in FIG. 12, FIG. 13, FIG. 14, and FIG. 15, all are based on the system architecture shown in FIG. 1. For example, it is assumed that a control plane network function entity includes an SMF and an AMF, and a user plane function entity is a UPF. In addition, the quantity N of access network devices is 2, that is, it is assumed that the access network devices include a first access network device and a second access network device. In the processes shown in FIG. 12, FIG. 13, FIG. 14, and FIG. 15, the terminal is connected to the UPF through the first access network device and the second access network device. Alternatively, it is assumed that the terminal has two transmission paths corresponding to the access network devices. Alternatively, it is assumed that the transmission paths corresponding to the first access network device and the second access network device are associated with the first PDU session of the terminal. Alternatively, it is assumed that the first PDU session is established on the first access network device and the second access network device. The SMF is configured to manage the first PDU session of the terminal, and the UPF, the first access network device, and the second access network device are configured to transmit data of the first PDU session.

Referring to FIG. 12, FIG. 12 shows a communication method according to an embodiment of this application. In this method, when a first access network device and a second access network device are connected to the same AMF, for downlink transmission, the first access network device performs a decision on split ratios or a transmission path of a data flow based on transmission assistance information of the first access network device and the second access network device.

As shown in FIG. 12, the procedure may include the following steps:
Step 1201: The terminal separately sends, to the AMF by using the first access network device and the second access network device, a PDU session establishment request message, to request to establish a first PDU session.

For the specific implementation of this step, refer to the relevant steps in FIG. 6.

Step 1202: The AMF sends, to the SMF, a PDU session context establishment request message, which includes the MA PDU request.

Optionally, the PDU session context establishment request message may further include multi-access indication information. The multi-access indication information indicates a dual radio access type (dual radio access), or indicates that the terminal accesses through a dual access type. For example, the multi-access indication information indicates that the terminal accesses through 3GPP access and non-3GPP access respectively. For another example, the multi-access type indication information indicates that the terminal accesses through two 3GPP access types or a dual 3GPP access type. For example, when the AMF receives, from two access network devices respectively, a PDU session establishment request for the first PDU session, the PDU session context establishment request message includes the multi-access indication information. For the case of two access network devices, the multi-access indication information indicates that the terminal accesses through two 3GPP access types or a dual 3GPP access type.

Optionally, the AMF may send identifiers (for example, a cell identifier) or addresses of the first access network device and the second access network device to the SMF. Correspondingly, in subsequent steps, the SMF determines to which access network device the first indication information is sent, or in other words, to which access network device the transmission parameters is requested. Optionally, an access network device with a smaller identifier value or address value may be selected, or an access network device may be selected based on other factors. This is not limited in the embodiments of this application.

Optionally, the AMF may select the first access network device to provide the transmission parameters, and send the identifier or address of the second access network device to the SMF.

Optionally, the PDU session context establishment request message may further include an identifier of the first PDU session.

Step 1203: The SMF sends first indication information to the first access network device. The first indication information indicates that the first access network device determines the transmission parameters corresponding to the transmission manner of the data of the first session. In other words, the first indication information indicates to request the transmission parameters corresponding to the transmission manner of the data of the first session.

In a possible implementation, the first indication information may indicate the first access network device to determine the transmission parameters corresponding to the transmission manner of the first data flow in the first PDU session. In other words, the first indication information may indicate the first access network device to determine the transmission parameters corresponding to the transmission manner of the data flow in the first PDU session. Optionally, the first indication information may indicate, by using a data flow identifier, the first access network device to determine the transmission parameters corresponding to the transmission manner of the data flow in the first PDU session.

In another possible implementation, the first indication information indicates that the first access network device determines, separately, the transmission parameters corresponding to the transmission manners of the multiple data flows in the first PDU session. In other words, the first indication information may indicate the first access network device to determine the transmission parameters corresponding to the transmission manners of the multiple data flows in the first PDU session, respectively. The transmission parameters of different data flows with the same transmission manner may be different. Optionally, the first access network device may be indicated to determine the transmission parameters corresponding to the transmission manners of the multiple data flows in the first PDU session, respectively, by using a data flow identifier. For example, the first PDU session includes a first data flow and a second data flow in the split transmission manner. According to the first indication information, the first access network device determines that the split ratios of the first data flow are the first split ratio, and determines that the split ratios of the second data flow are the second split ratio. For another example, the first PDU session includes a first data flow and a second data flow in the path selection transmission manner. According to the first indication information, the first access network device determines that the target transmission path of the first data flow is the first transmission path corresponding to the first access network device, and determines that the target transmission path of the second data flow is the second transmission path corresponding to the second access network device.

In another possible implementation, the first indication information indicates that the first access network device determines, at a PDU session granularity, the transmission parameters corresponding to the transmission manner of the data of the first PDU session. In other words, the first indication information indicates to determine same transmission parameters for data flows in the same transmission manner. For example, the first PDU session includes a first data flow and a second data flow in the split transmission manner. The first access network device determines a first split ratio based on the first indication information, and both the first data flow and the second data flow are transmitted on different transmission paths based on the first split ratio. For another example, the first PDU session includes the first data flow and the second data flow in the path selection transmission manner. The first access network device determines the first target transmission path based on the first indication information, and both the first data flow and the second data flow are transmitted by using the first target transmission path.

Optionally, when determining that the transmission path corresponding to the first access network device and the transmission path corresponding to the second access network device are associated with the first PDU session of the terminal, the SMF sends the first indication information to the first access network device. A specific implementation in which the SMF determines whether the transmission path corresponding to the first access network device and the transmission path corresponding to the second access network device are associated with the first PDU session of the terminal, may refer to the related content described above.

Optionally, the SMF may further send the identifier or address of the second access network device to the first access network device, so that the first access network device can interact with the second access network device to obtain the transmission assistance information of the second access network device. Optionally, the SMF may obtain the identifier or address of the second access network device from the AMF, or the AMF may send the identifier or address of the second access network device to the SMF. In some other embodiments, the terminal or the AMF may also send the identifier or address of the second access network device to the first access network device.

Optionally, the SMF may further send the reporting frequency indication information to the first access network device, so that the first access network device can indicate the second access network device to send the transmission assistance information to the first access network device according to the reporting frequency indicated by the reporting frequency indication information. Specifically, the reporting frequency indication information may indicate the number of times per second that reporting is performed, or indicate that reporting is performed once every several seconds.

Optionally, the first indication information may further indicate that the first access network device sends the transmission parameters to the UPF. Optionally, the SMF may indicate, by using other indication information, for example, second indication information, that the first access network device sends the transmission parameters to the UPF.

In a possible implementation, the SMF sends a session container (N2 SM information) to the first access network device through the AMF. The container includes the first indication information, and optionally, may further include the reporting frequency indication information. Optionally, the container may further include an identifier of the second access network device (for example, a cell ID, that is, a cell identifier)).

Step 1204: The SMF sends transmission indication information to the UPF. The transmission indication information includes fifth transmission indication information, and the fifth transmission indication information indicates that the UPF performs transmission on data of the first PDU session according to the transmission parameters.

In a possible implementation, the fifth transmission indication information indicates that for a first data flow in the first PDU session, transmission is performed according to transmission parameters corresponding to a transmission manner of the first data flow.

In another possible implementation, the fifth transmission indication information indicates that for a plurality of data flows (for example, may be each data flow) in the first PDU session, transmission is performed according to transmission parameters corresponding to a transmission manner of each of the plurality of data flows.

In another possible implementation, the fifth transmission indication information indicates that each data flow in the first PDU session is transmitted according to the transmission parameters at a granularity of a PDU session. For example, a transmission manner of all data flows in the first PDU session is a path selection transmission manner, and transmission parameters received by the UPF indicate a target transmission path, then all data flows in the first PDU session are transmitted through the target transmission path. For another example, a transmission manner of all data flows in the first PDU session is a split transmission manner, and transmission parameters received by the UPF indicates split ratios, then all data flows in the first PDU session are transmitted according to the split ratios on different transmission paths. For another example, the first PDU session includes M data flows in a split transmission manner and N data flows in a path selection transmission manner, and transmission parameters received by the UPF includes an indication of a target transmission path and split ratios, then all the M data flows in the first PDU session are transmitted according to the split ratios on different transmission paths, and all the N data flows in the first PDU session are transmitted through the target transmission path.

Optionally, the transmission indication information further includes sixth transmission indication information, and the sixth transmission indication information indicates a transmission manner of the data of the first PDU session.

For example, the first PDU session includes at least one data flow, the at least one data flow includes a first data flow, and the data of the first PDU session includes the first data flow. Correspondingly, the sixth transmission indication information may indicate a transmission manner of the first data flow in the first PDU session.

For another example, the first PDU session includes multiple data flows, the sixth transmission indication information may indicate a transmission manner of the multiple data flows, and the transmission manners of the multiple data flows may be the same or may be different. For example, the first transmission indication information indicates that the first data flow in the first PDU session is a split transmission manner, and indicates that the second data flow in the first PDU session is a path selection transmission manner. This is not limited in this application.

In a possible implementation, when the transmission manner is a redundant transmission manner, that is, the sixth transmission indication information indicates that a transmission manner of the data of the first PDU session is a redundant transmission manner, the fifth transmission indication information indicates to enable or disable the redundant transmission manner for transmitting the data of the first PDU session according to the transmission parameters corresponding to the received redundant transmission manner.

Optionally, the SMF may obtain, from the PCF, information about a transmission manner of the data of the first PDU session, and then configure, for the UPF by using the sixth transmission indication information, the transmission manner of the data of the first PDU session.

Optionally, the PCF or the SMF determines, based on a requirement for the data of the first PDU session, the transmission manner of the data of the first PDU session. For example, the data of the first PDU session includes a first data flow. If a transmission rate requirement of the first data flow is relatively high, it is determined that the transmission manner of the first data flow is a split transmission manner. If a transmission reliability requirement of the first data flow is relatively high, it is determined that the transmission manner of the first data flow is a redundant transmission manner.

Optionally, the SMF may further send a split rule or a transmission path selection rule to the UPF. For related descriptions of the split rule and the transmission path selection rule, refer to related content in the foregoing descriptions.

Step 1205: The first access network device determines, based on the transmission assistance information of the first access network device and the second access network device, transmission parameters corresponding to the transmission manner of the data of the first PDU session.

If the transmission manner is the split transmission manner, the first access network device determines, based on the transmission assistance information of the first access network device and the second access network device, the split ratios of the data of the first PDU session on the transmission paths corresponding to the first access network device and the second access network device. If the transmission manner is the path selection transmission manner, the first access network device determines the target transmission path of the data of the first PDU session based on the transmission assistance information of the first access network device and the transmission assistance information of the second access network device.

In a possible implementation, the first access network device determines transmission parameters corresponding to the transmission manner of the first data flow in the first PDU session. In other words, the first access network device may determine transmission parameters corresponding to a transmission manner of a data flow in the first PDU session. Optionally, the first access network device may indicate, by using the data flow identifier, transmission parameters corresponding to a transmission manner of a data flow in the first PDU session to be determined.

In another possible implementation, the first access network device separately determines transmission parameters corresponding to a transmission manner of a plurality of data flows in the first PDU session. In other words, the first access network device may determine transmission parameters corresponding to transmission manners of a plurality of data flows in the first PDU session, and transmission parameters of different data flows having the same transmission manner may be different. Optionally, the first access network device may indicate, by using the data flow identifier, transmission parameters corresponding to transmission manners of specific data flows in the first PDU session. For example, the first PDU session includes the first data flow and the second data flow in the split transmission manner. The first access network device determines that the split ratios of the first data flow are the first split ratio, and determines that the split ratios of the second data flow are the second split ratio. For another example, the first PDU session includes the first data flow and the second data flow in the path selection transmission manner. The UPF determines that the target transmission path of the first data flow is the first transmission path corresponding to the first access network device, and determines that the target transmission path of the second data flow is the second transmission path corresponding to the second access network device.

In another possible implementation, the first access network device determines, at a granularity of a PDU session, the transmission parameters corresponding to the transmission manner of the data of the first PDU session. Alternatively, the first access network device may determine same transmission parameters for data flows with the same transmission manner. For example, the first PDU session includes a first data flow and a second data flow that are transmitted in a split transmission manner. The first access network device determines a first split ratio, and both the first data flow and the second data flow are transmitted on different transmission paths according to the first split ratio. For another example, the first PDU session includes a first data flow and a second data flow that are transmitted in a path selection transmission manner. The first access network device determines a first target transmission path, and both the first data flow and the second data flow are transmitted through the first target transmission path.

Optionally, the first access network device may obtain the transmission assistance information from the second access network device based on the identifier or address of the second access network device. The identifier or address of the second access network device may be sent by the SMF to the first access network device, or sent by the AMF to the first access network device, or sent by the terminal to the first access network device.

Optionally, the first access network device may indicate, based on the reporting frequency indication information sent by the SMF, the second access network device to send the transmission assistance information according to the reporting frequency indicated by the reporting frequency indication information.

Optionally, the first access network device determines, based on the transmission assistance information of the first access network device and the second access network device and the capability information of the terminal, the transmission parameters corresponding to the transmission manner of the data of the first PDU session. The capability information of the terminal indicates the air interface transmission capability of the terminal on the first access network device and the second access network device.

In another embodiment, when the quantity of access network devices is N (N is an integer greater than 2)), the first access network device obtains the transmission assistance information of other devices in the N access network devices except the first access network device, and determines, based on the transmission assistance information and the transmission assistance information of the first access network device itself, the transmission parameters corresponding to the transmission manner of the data of the first PDU session.

Optionally, when the transmission manner is a redundant transmission manner, step 1205 is replaced with: The first access network device determines, based on the transmission assistance information, to use the redundant transmission manner to transmit the data of the first PDU session. For example, if the signalling status of the first access network device and the signalling status of the second access network device are both poor, it is determined to use the redundant transmission manner to transmit the data of the first PDU session. For example, if the transmission reliability between the first access network device and the terminal and the transmission reliability between the second access network device and the terminal are both poor, it is determined to use the redundant transmission manner to transmit the data of the first PDU session. Further, taking an example in which the data of the first PDU session is the first data flow in the first PDU session, when the transmission reliability in the transmission assistance information is poor, the first access network device determines to enable the redundant transmission manner to transmit the first data flow. When the transmission reliability in the transmission assistance information is good, the first access network device determines to disable or stop the redundant transmission manner to transmit the first data flow.

Step 1206: The first access network device sends the transmission parameters to the UPF.

Step 1207: The UPF transmits the data of the first PDU session based on the determined transmission parameters. The specific implementation may refer to the related content described above.

In a possible implementation, after receiving the transmission parameters, the UPF may determine new transmission parameters based on the transmission parameters and the measurement information, or adjust the received transmission parameters, for example, adjust the split ratios or re-determine the target transmission path. Then, data transmission is performed based on the new or adjusted transmission parameters. Optionally, the measurement information may include measurement information obtained based on RTT measurement and/or PER measurement. In this way, the reliability of the decision can be further improved.

Optionally, the SMF may indicate the UPF to determine new transmission parameters or adjust thereceived transmission parameters based on the transmission parameters and the measurement information. In other words, the transmission parameters determined by the first access network device is the recommended transmission parameters, and the UPF may determine, in combination with the recommended transmission parameters and other considerations, the transmission parameters used by the UPF, so as to perform data transmission. Correspondingly, the fifth transmission indication information may be understood as: used to indicate the UPF to transmit the data of the first PDU session based on the recommended transmission parameters.

Optionally, when the transmission manner is the redundant transmission manner, the UPF enables or stops transmitting the data of the first PDU session in the redundant transmission manner based on the received transmission parameters corresponding to the redundant transmission manner.

It may be understood that the time sequence relationship of the steps in the procedure shown in FIG. 12 is only an example, and the time sequence relationship of the steps is not limited in the embodiments of this application.

In another embodiment, the first access network device sends the transmission parameters to the SMF, and the SMF sends the transmission parameters to the UPF. Other steps are similar to those in FIG. 12. Optionally, the first indication information sent by the SMF to the first access network device further indicates that the first access network device sends the transmission parameters to the SMF, or the SMF may indicate, by using the second indication information, the first access network device to send the transmission parameters to the SMF.

In the procedure shown in FIG. 12, the first access network device determines, based on the transmission assistance information of the access network device and the transmission assistance information of another access network device, split ratios of data of the PDU session on different transmission paths in the split transmission manner, or determines a target transmission path of data of the PDU session in the path selection transmission manner. Because the access network device obtains the transmission assistance information in a negotiation manner, compared with a UPF performing PMF measurement to obtain transmission performance between the UPF and the terminal, a delay can be reduced, reliability can be improved, real-time performance can be further improved, and decision-making performance can be improved.

Referring to FIG. 13, a communication method according to an embodiment of this application is provided. In this method, when the first access network device and the second access network device are connected to different AMFs, for downlink transmission, the first access network device performs a decision on split ratios or a transmission path based on transmission assistance information of the first access network device and the second access network device.

As shown in FIG. 13, the procedure may include the following steps:
Step 1301: The terminal sends, to the first AMF by using the first access network device, a PDU session establishment request message, for requesting to establish a first PDU session. The terminal sends, to the second AMF by using the second access network device, a PDU session establishment request message, for requesting to establish a first PDU session.
Steps 1302a and 1302b: The first AMF sends, to the SMF, a PDU session context establishment request message, which includes an MA PDU request. The second AMF sends, to the SMF, a PDU session context establishment request message, which includes an MA PDU request.
Step 1303: The SMF sends first indication information to the first access network device. The first indication information indicates that the first access network device determines the transmission parameters corresponding to the transmission manner of the data of the first session. Alternatively, the first indication information indicates a request for the transmission parameters corresponding to the transmission manner of the data of the first session.
Step 1304: The SMF sends transmission indication information to the UPF. The transmission indication information includes fifth transmission indication information, which indicates the UPF to transmit the data of the first PDU session according to the transmission parameters.
Step 1305: The first access network device determines, based on the transmission assistance information of the first access network device and the transmission assistance information of the second access network device, the transmission parameters corresponding to the transmission manner of the data of the first PDU session.
Step 1306: The first access network device sends the transmission parameters to the UPF.
Step 1307: The UPF transmits the data of the first PDU session according to the determined transmission parameters. The specific implementation manner may refer to the related content in the foregoing.

In the foregoing procedure shown in FIG. 13, for step 1301, step 1302a, and step 1302b, refer to implementations of related steps in FIG. 7. For step 1303 to step 1307, refer to the implementation manners of the related steps in FIG. 12.

It may be understood that the time sequence relationship of the steps in the procedure shown in FIG. 13 is merely an example, and the time sequence relationship of the steps is not limited in the embodiments of this application.

In another embodiment, the first access network device sends the transmission parameters to the SMF, and the SMF sends the transmission parameters to the UPF. Other steps are similar to those in FIG. 13. Optionally, the first indication information sent by the SMF to the first access network device further indicates that the first access network device sends the transmission parameters to the SMF, or the SMF may indicate, by using the second indication information, the first access network device to send the transmission parameters to the SMF.

FIG. 14 shows a communication method according to an embodiment of this application. In the method, when the first access network device and the second access network device are connected to the same AMF, for uplink transmission, the first access network device determines the split ratios or the transmission path of the data flow based on the transmission assistance information of the first access network device and the second access network device.

As shown in FIG. 14, the procedure may include the following steps:
Step 1401: The terminal separately sends, to the AMF, a PDU session establishment request message by using the first access network device and the second access network device, to request to establish the first PDU session.
Step 1402: The AMF sends a PDU session context establishment request message to the SMF, which includes the MA PDU request.
Step 1403: The SMF sends first indication information to the first access network device. The first indication information indicates that the first access network device determines transmission parameters corresponding to a transmission manner of data of the first session. In other words, the first indication information indicates to request the transmission parameters corresponding to the transmission manner of the data of the first session.

Optionally, the SMF may further send an identifier or an address of the second access network device to the first access network device, and report frequency indication information, and the like.

Step 1404: The SMF sends transmission indication information to the terminal. The transmission indication information includes fifth transmission indication information, and the fifth transmission indication information indicates that the terminal transmits data of the first PDU session based on the transmission parameters.

Step 1405: The first access network device determines, based on the transmission assistance information of the first access network device and the second access network device, transmission parameters corresponding to a transmission manner of the data of the first PDU session.

Step 1406: The first access network device sends the transmission parameters to the terminal.

Step 1407: The terminal transmits the data of the first PDU session based on the determined transmission parameters.

In the process shown in FIG. 14, for steps, refer to related steps in the process shown in FIG. 12. A difference lies in that "UPF" in FIG. 12 is replaced with "terminal," so that the terminal performs uplink transmission based on the transmission parameters determined by the first access network device.

It can be understood that the time sequence relationship between the steps in the process shown in FIG. 14 is merely an example, and the time sequence relationship of the steps is not limited in the embodiments of this application.

In another embodiment, the first access network device sends the transmission parameters to the SMF, and the SMF sends the transmission parameters to the UPF. Other steps are similar to those in FIG. 14. Optionally, the first indication information sent by the SMF to the first access network device further indicates that the first access network device sends the transmission parameters to the SMF. Alternatively, the SMF may also indicate, by using the second indication information, that the first access network device sends the transmission parameters to the SMF.

Referring to FIG. 15, FIG. 15 is a communication method according to an embodiment of this application. In this method, when the first access network device and the second access network device are connected to different AMFs, for uplink transmission, the first access network device performs a decision on the split ratios or the transmission path of the data flow based on the transmission assistance information of the first access network device and the second access network device. Optionally, the first indication information sent by the SMF to the first access network device further indicates that the first access network device sends the transmission parameters to the SMF. Alternatively, the SMF may also indicate, by using the second indication information, that the first access network device sends the transmission parameters to the SMF.

As shown in FIG. 15, the procedure may include the following steps:
Step 1501: The terminal sends a PDU session establishment request message to the first AMF through the first access network device, to request to establish the first PDU session. The terminal sends a PDU session establishment request message to the second AMF through the second access network device, to request to establish the first PDU session.
Steps 1502a and 1502b: The first AMF sends a PDU session context establishment request message to the SMF, which includes an MA PDU request. The second AMF sends a PDU session context establishment request message to the SMF, which includes an MA PDU request.
Step 1503: The SMF sends first indication information to the first access network device. The first indication information indicates that the first access network device determines the transmission parameters corresponding to the transmission manner of the data of the first session. Alternatively, the first indication information indicates a request for the transmission parameters corresponding to the transmission manner of the data of the first session.
Step 1504: The SMF sends transmission indication information to the terminal. The transmission indication information includes fifth transmission indication information, and the fifth transmission indication information indicates that the UPF performs transmission of the data of the first PDU session based on the transmission parameters.
Step 1505: The first access network device determines, based on the transmission assistance information of the first access network device and the second access network device, transmission parameters corresponding to a transmission manner of the data of the first PDU session.
Step 1506: The first access network device sends the transmission parameters to the terminal.
Step 1507: The terminal performs transmission of the data of the first PDU session based on the determined transmission parameters. The specific implementation manner may refer to related content in the foregoing descriptions.

For the steps of the procedure shown in FIG. 15, refer to related steps in the procedure shown in FIG. 13. A difference lies in that "UPF" in FIG. 13 is replaced with "terminal," so that the terminal performs uplink transmission based on the transmission parameters determined by the first access network device.

It can be understood that the time sequence relationship between the steps in the procedure shown in FIG. 15 is merely an example, and the time sequence relationship of the steps is not limited in the embodiments of this application.

In another embodiment, the first access network device sends the transmission parameters to the SMF, and the SMF sends the transmission parameters to the UPF. Other steps are similar to those in FIG. 15. Optionally, the first indication information sent by the SMF to the first access network device further indicates that the first access network device sends the transmission parameters to the SMF. Alternatively, the SMF may also indicate, by using the second indication information, that the first access network device sends the transmission parameters to the SMF.

It can be understood that, in order to implement the functions in the foregoing embodiments, the network device and the terminal device include a corresponding hardware structure and/or software module for performing each function. A person skilled in the art should be easily aware that, in combination with the units and the method steps of each example described in the embodiments disclosed in this application, this application can be implemented by hardware or a combination of hardware and computer software. Whether a function is performed by hardware or computer software driving hardware depends on a particular application scenario and design constraint conditions of the technical solution.

FIG. 16 and FIG. 17 are schematic structural diagrams of a possible communication apparatus according to an embodiment of this application. These communication apparatuses may be configured to implement functions of the terminal apparatus or the network apparatus in the foregoing method embodiment, and therefore can also achieve beneficial effects of the foregoing method embodiment.

As shown in FIG. 16, the communication apparatus 1600 includes a processing unit 1610 and a transceiver unit 1620. The communication apparatus 1600 is configured to implement functions of the terminal or the network device in the method embodiment shown in any one of FIG. 6 to FIG. 15.

When the communication apparatus 1600 is configured to implement a function of the user plane function entity in the method embodiment shown in FIG. 6 or FIG. 7, the transceiver unit 1620 is configured to receive transmission indication information from the session management function entity, wherein the transmission indication information includes first transmission indication information. The first transmission indication information indicates a transmission manner of data of a first session; and the transmission manner is the split transmission manner or the path selection transmission manner, the first device comprises a terminal and/or a user plane function entity, the session management function entity is configured to manage the first session of the terminal, and the user plane function entity is configured to transmit data of the first session. The transceiver unit 1620 is further configured to receive transmission assistance information from N access network devices, wherein the transmission assistance information of the N access network devices indicates transmission performance of transmission paths corresponding to the N access network devices, and N is a positive integer greater than 1. The N access network devices are configured to transmit data of the first session. The processing unit 1610 is configured to: when the transceiver unit 1620 receives the transmission indication information, determine, based on the transmission assistance information, transmission parameters corresponding to the transmission manner of the data of the first session. The transmission parameters corresponding to the split transmission manner indicate the split ratios of the data of the first session on the transmission paths corresponding to the N access network devices, and the transmission parameters corresponding to the path selection transmission manner indicate the target transmission path of the data of the first session. The target transmission path is one of the transmission paths corresponding to the N access network devices.

When the communication apparatus 1600 is configured to implement a function of the terminal in the method embodiment shown in FIG. 8 or FIG. 9, the transceiver unit 1620 is configured to receive transmission indication information from a session management function entity, wherein the transmission indication information includes first transmission indication information. The first transmission indication information indicates a transmission manner of data of a first session; and the transmission manner is the split transmission manner or the path selection transmission manner, the first device comprises a terminal and/or a user plane function entity, the session management function entity is configured to manage the first session of the terminal, and the user plane function entity is configured to transmit data of the first session. The transceiver unit 1620 is further configured to receive transmission assistance information from N access network devices, wherein the transmission assistance information of the N access network devices indicates transmission performance of transmission paths corresponding to the N access network devices, and N is a positive integer greater than 1. The N access network devices are configured to transmit data of the first session. The processing unit 1610 is configured to: when the transceiver unit 1620 receives the transmission indication information, determine, based on the transmission assistance information, transmission parameters corresponding to the transmission manner of the data of the first session. The transmission parameters corresponding to the split transmission manner indicate split ratios of the data of the first session on the transmission paths corresponding to the N access network devices, and the transmission parameters corresponding to the path selection transmission manner indicate the target transmission path of the data of the first session. The target transmission path is one of the transmission paths corresponding to the N access network devices.

When the communication apparatus 1600 is configured to implement a function of the session management function entity in the method embodiment shown in FIG. 6, FIG. 7, FIG. 8, or FIG. 9, the processing unit 1610 is configured to send reporting indication information to the N access network devices by using the transceiver unit 1620. The reporting indication information sent to the first access network device is used to indicate the first access network device to send the transmission assistance information to the first device, wherein the first access network device is one of the N access network devices; and the transmission assistance information of the N access network devices indicates transmission performance of transmission paths corresponding to the N access network devices, the first device comprises a terminal and/or a user plane function entity, and N is a positive integer greater than 1; and the session management function entity is configured to manage a first session of the terminal, and the N access network devices and the user plane function entity are configured to transmit data of the first session. The processing unit 1610 further sends transmission indication information to the first device by using the transceiver unit 1620, wherein the transmission indication information includes second transmission indication information. The second transmission indication information is used to indicate the first device to determine, based on the transmission assistance information of the N access network devices, the transmission parameters corresponding to the transmission manner of the data of the first session, and the transmission manner is the split transmission manner or the path selection transmission manner; and the transmission parameters corresponding to the split transmission manner indicate the split ratios of the data of the first session on the transmission paths corresponding to the N access network devices, and the transmission parameters corresponding to the path selection transmission manner indicate the target transmission path of the data of the first session. The target transmission path is one of the transmission paths corresponding to the N access network devices.

When the communication apparatus 1600 is configured to implement a function of the access network device in the method embodiment shown in FIG. 6, FIG. 7, FIG. 8, or FIG. 9, the transceiver unit 1620 is configured to receive reporting indication information from the session management function entity. The processing unit 1610 is configured to send transmission assistance information to the session management function entity or a first device based on the reporting indication information, wherein the transmission assistance information indicates transmission performance of a transmission path corresponding to the first access network device, and the first device includes a terminal and/or a user plane function entity. The session management function entity is configured to manage a first session of the terminal, and the first access network device and the user plane function entity are configured to transmit data of the first session.

When the communication apparatus 1600 is configured to implement a function of the user plane function entity in the method embodiment shown in FIG. 10 or FIG. 11, the transceiver unit 1620 is configured to receive, from the session management function entity, transmission parameters corresponding to a transmission manner, wherein the transmission manner is a split transmission manner or a path selection transmission manner. The transmission parameters corresponding to the split transmission manner indicate the split ratios of the data of the first session on the transmission paths corresponding to the N access network devices, and the transmission parameters corresponding to the path selection transmission manner indicate the target transmission path of the data of the first session. The target transmission path is one of the transmission paths corresponding to the N access network devices, and the transmission parameters are determined based on the transmission assistance information of the N access network devices; and the transmission assistance information of the N access network devices indicates transmission performance of transmission paths corresponding to the N access network devices, the first device comprises a terminal and/or a user plane function entity, and N is a positive integer; and the session management function entity is configured to manage the first session of the terminal, and the N access network devices and the user plane function entity are configured to transmit data of the first session; and the processing unit 1610 is configured to transmit data of the first session based on the transmission parameters.

When the communication apparatus 1600 is configured to implement the method embodiment shown in FIG. 10 or FIG. 11, and to implement the functions of the terminal in the method embodiment, the transceiver unit 1620 is configured to receive transmission parameters corresponding to a transmission manner from a session management function entity. The transmission manner is a split transmission manner or a path selection transmission manner. The transmission parameters corresponding to the split transmission manner indicate split ratios of the data of the first session on the transmission paths corresponding to the N access network devices. The transmission parameters corresponding to the path selection transmission manner indicate a target transmission path of the data of the first session, wherein the target transmission path is one of the transmission paths corresponding to the N access network devices. The transmission parameters are determined based on the transmission assistance information of the N access network devices. The transmission assistance information of the N access network devices indicates the transmission performance of the transmission paths corresponding to the N access network devices. The first device includes a terminal and/or a user plane function entity, wherein N is a positive integer. The session management function entity is configured to manage the first session of the terminal, and the N access network devices and the user plane function entity are configured to transmit the data of the first session. The processing unit 1610 is configured to transmit the data of the first session based on the transmission parameters.

When the communication apparatus 1600 is configured to implement a function of the session management function entity in the method embodiment shown in FIG. 10 or FIG. 11, the processing unit 1610 sends the reporting indication information to the N access network devices by using the transceiver unit. The reporting indication information indicates that the N access network devices send transmission assistance information to a first device, the transmission assistance information of the N access network devices indicates performance of transmission paths corresponding to the N access network devices, and the first device comprises a terminal and/or a user plane function entity, wherein N is a positive integer greater than 1. The session management function entity is configured to manage a first session of the terminal, and the N access network devices and the user plane function entity are configured to transmit data of the first session. The transceiver unit 1620 is further configured to receive the transmission assistance information from the N access network devices. The processing unit 1610 is further configured to determine, based on the transmission assistance information, transmission parameters corresponding to a transmission manner of the data of the first session, wherein the transmission manner is a split transmission manner or a path selection transmission manner. The transmission parameters corresponding to the split transmission manner indicate the split ratios of the data of the first session on the transmission paths corresponding to the N access network devices, and the transmission parameters corresponding to the path selection transmission manner indicate the target transmission path of the data of the first session; and the target transmission path is one of the transmission paths corresponding to the N access network devices; and the transmission parameters are sent by the session management function entity to the first device.

When the communication apparatus 1600 is configured to implement the functions of the user plane function entity in the method embodiments shown in FIG. 12 or FIG. 13, the following is performed: The transceiver unit 1620 is configured to receive transmission indication information from a control plane function entity, wherein the transmission indication information includes fifth transmission indication information, and the fifth transmission indication information indicates that the first device transmits data of the first session according to transmission parameters corresponding to the transmission manner. The first device receives the transmission parameters corresponding to the transmission manner from a first access network device, wherein the transmission manner is a split transmission manner or a path selection transmission manner, the transmission parameters corresponding to the split transmission manner indicate split ratios of data on transmission paths corresponding to N access network devices, the transmission parameters corresponding to the path selection transmission manner indicate a target transmission path of the data, and the target transmission path is one of the transmission paths corresponding to the N access network devices. The first device includes a terminal and/or a user plane function entity. The session management function entity is configured to manage the first session of the terminal. The N access network devices and the user plane function entity are configured to transmit the data of the first session.

When the communication apparatus 1600 is configured to implement the method embodiment shown in FIG. 14 or FIG. 15, and to implement the functions of the terminal in the method embodiment. The transceiver unit 1620 is configured to receive transmission indication information from a control plane function entity, wherein the transmission indication information comprises fifth transmission indication information, and the fifth transmission indication information indicates that the first device transmits data of the first session according to transmission parameters corresponding to the transmission manner. The first device receives the transmission parameters corresponding to the transmission manner from a first access network device, wherein the transmission manner is a split transmission manner or a path selection transmission manner. The transmission parameters corresponding to the split transmission manner indicate split ratios of data on transmission paths corresponding to N access network devices. The transmission parameters corresponding to the path selection transmission manner indicate a target transmission path of the data, wherein the target transmission path is one of the transmission paths corresponding to the N access network devices. The first device comprises a terminal and/or a user plane function entity. The session management function entity is configured to manage the first session of the terminal, and the N access network devices and the user plane function entity are configured to transmit the data of the first session.

When the communication apparatus 1600 is configured to implement a function of the session management function entity in the method embodiment shown in FIG. 12, FIG. 13, FIG. 14, or FIG. 15, the processing unit 1610 is configured to send the first indication information to the first access network device in the N access network devices by using the transceiver unit 1620. The first indication information indicates that the first access network device determines transmission parameters corresponding to a transmission manner of data of a first session, and the transmission manner is a split transmission manner or a path selection transmission manner; and the transmission parameters corresponding to the split transmission manner indicate the split ratios of the data of the first session on the transmission paths corresponding to the N access network devices, and the transmission parameters corresponding to the path selection transmission manner indicate the target transmission path of the data of the first session; and the target transmission path is one of the transmission paths corresponding to the N access network devices, and the transmission parameters are determined based on transmission assistance information of the N access network devices; and the transmission assistance information of the N access network devices indicates transmission performance of transmission paths corresponding to the N access network devices, and N is a positive integer greater than 1; and the processing unit 1610 sends transmission indication information to a first device by using the transceiver unit 1620, wherein the transmission indication information includes fifth transmission indication information, the fifth transmission indication information indicates that the first device transmits data of a first session based on the transmission parameters, and the first device includes a terminal and/or a user plane function entity. The session management function entity is configured to manage the first session of the terminal, and the N access network devices and the user plane function entity are configured to transmit data of the first session.

When the communication apparatus 1600 is configured to implement a function of the access network device in the method embodiment shown in FIG. 12, FIG. 13, FIG. 14, or FIG. 15, the transceiver unit is configured to receive first indication information from a session management function entity. The first indication information indicates that the first access network device determines transmission parameters corresponding to a transmission manner of data of a first session, and the transmission manner is a split transmission manner or a path selection transmission manner; and the transmission parameters corresponding to the split transmission manner indicate split ratios of the data of the first session on the transmission paths corresponding to the N access network devices comprising the first access network device, and the transmission parameters corresponding to the path selection transmission manner indicate the target transmission path of the data of the first session. The target transmission path is one of the transmission paths corresponding to the N access network devices, and N is a positive integer greater than 1; and determining, by the first access network device based on the transmission assistance information of the N access network devices, transmission parameters corresponding to the transmission manner of the data of the first session, wherein the transmission assistance information of the N access network devices indicates transmission performance of transmission paths corresponding to the N access network devices; and the processing unit 1610 is configured to send the transmission parameters to a first device or the control plane function entity by using the transceiver unit 1620, wherein the first device includes a terminal and/or a user plane function entity. The session management function entity is configured to manage the first session of the terminal, and the N access network devices and the user plane function entity are configured to transmit data of the first session.

For more detailed descriptions of the processing unit 1610 and the transceiver unit 1620 mentioned above, please directly refer to the method embodiments shown in the related drawings. The relevant descriptions can be directly obtained from these embodiments, and thus will not be repeated here.

As shown in FIG. 17, the communication apparatus 1700 includes a processor 1710 and an interface circuit 1720. The processor 1710 and the interface circuit 1720 are coupled to each other. It can be understood that the interface circuit 1720 may be a transceiver or an input/output interface. Optionally, the communication apparatus 1700 may further include a memory 1730, configured to store instructions executed by the processor 1710, or store input data required for the processor 1710 to run the instructions, or store data generated after the processor 1710 runs the instructions.

When the communication apparatus 1700 is configured to implement the methods shown in FIG. 6 to FIG. 15, the processor 1710 is configured to implement the functions of the processing unit 1610 mentioned above, and the interface circuit 1720 is configured to implement the functions of the transceiver unit 1620 mentioned above.

When the aforementioned communication apparatus is a chip applied to a terminal device, the terminal chip implements the functions of the terminal device in the method embodiments. The terminal chip receives information from other modules (such as a radio frequency module or an antenna) in the terminal device. This information is sent by the network device to the terminal. Alternatively, the terminal chip sends information to other modules (such as a radio frequency module or an antenna) in the terminal device. This information is sent by the terminal device to the network device.

When the aforementioned communication apparatus is a module applied to a network device, the network device module implements the functions of the network device in the method embodiments. The network device module receives information from other modules (such as a radio frequency module or an antenna) in the network device. This information is sent by the terminal to the network device. Alternatively, the network device module sends information to other modules (such as a radio frequency module or an antenna) in the network device. This information is sent by the network device to the terminal. Here, the network device module may be a baseband chip of the network device, or may be a DU or another module. The DU here may be a DU in an open radio access network (open radio access network, O-RAN) architecture.

It can be understood that, in embodiments of this application, the processor may be a central processing unit (Central Processing Unit, CPU), or may be another general-purpose processor, a digital signal processor (Digital Signal Processor, DSP)), an application-specific integrated circuit (Application Specific Integrated Circuit, ASIC)), a field programmable gate array (Field Programmable Gate Array, FPGA)), or another programmable logic device, a transistor logic device, a hardware component, or any combination thereof. The general-purpose processor may be a microprocessor, or may be any conventional processor.

In this application, another example of a communication apparatus is provided. The communication apparatus includes at least one processor and at least one memory. The at least one processor and the at least one memory are coupled. The at least one memory is configured to store instructions. When the instructions are executed by the at least one processor, the communication apparatus is enabled to perform the method performed by the terminal device or the network device in the foregoing embodiments. For example, the communication apparatus includes one processor and one memory. As shown in FIG. 17, the communication apparatus 1700 includes one processor 1710 and one memory 1730. The processor 1710 and the memory 1730 are coupled. The memory 1730 stores instructions. When the instructions stored in the memory 1730 are executed by the processor 1710, the communication apparatus 1700 performs the method performed by the terminal device or the network device in the foregoing embodiments.

The method steps in the embodiments of this application may be implemented in hardware, or may be implemented in a software instruction executable by a processor. The software instruction may be formed by a corresponding software module, and the software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or the present in any other form of storage medium well known in the art. An exemplary storage medium is coupled to the processor, so that the processor can read information from the storage medium and can write information to the storage medium. Alternatively, the storage medium may be a component of the processor. The processor and the storage medium may be located in an ASIC. In addition, the ASIC may be located in a network device or a terminal. Alternatively, the processor and the storage medium may be used as discrete components in a network device or a terminal.

All or some of the foregoing embodiments may be implemented by using software, hardware, firmware, or any combination thereof. When implemented by using software, all or some of the applications may be implemented in a form of a computer program product. The computer program product includes one or more computer programs or instructions. When the computer program or instruction is loaded and executed on a computer, all or some of the procedures or functions described in the embodiments of this application are performed. The computer may be a general-purpose computer, a dedicated computer, a computer network, a network device, user equipment, or another programmable apparatus. The computer program or instruction may be stored in a computer readable storage medium, or transmitted from one computer readable storage medium to another computer readable storage medium. For example, The computer program or instruction may be transmitted from one website site, computer, server, or data center to another website site, computer, server, or data center, in a wired or wireless manner. The computer readable storage medium may be any usable medium accessible by a computer, or a data storage device such as a server or a data center that integrates one or more usable media. The usable medium may be a magnetic medium, for example, a floppy disk, a hard disk, or a magnetic tape. It may also be an optical medium, for example, a digital video optical disk; It may also be a semiconductor medium, for example, a solid state disk. The computer-readable storage medium may be a volatile or non-volatile storage medium, or may include two types of storage media: volatile and non-volatile.

In various embodiments of this application, unless otherwise specified or there is a logical conflict, the terms and/or descriptions between different embodiments are consistent and may be mutually referenced. The technical features in different embodiments may be combined to form a new embodiment according to their inherent logical relationships.

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists. In these cases, A and B may be singular or plural. In the text description of this application, the character "/" generally indicates that an association relationship between the objects before and after the "/" is an "or" relationship. In the formulas of this application, the character "/" indicates that an association relationship between the objects before and after the "/" is a "division" relationship. "Includes at least one of A, B, and C" may represent the following cases: includes A; includes B; includes C; includes both A and B; includes both A and C; includes both B and C; includes A, B, and C.

It can be understood that, in the embodiments of this application, various numerical numbers are merely for distinguishing for ease of description, and are not intended to limit the scope of the embodiments of this application. The sequence numbers of the foregoing processes do not mean an execution sequence. The execution sequence of the processes should be determined according to the functions and internal logic of the processes.

## Claims

1. A communication method, wherein the method comprises:
receiving, by a first device, transmission indication information from a session management function entity, wherein the transmission indication information includes first transmission indication information, and wherein the first transmission indication information indicates a transmission manner of data of a first session; and wherein the transmission manner is a split transmission manner or a path selection transmission manner, wherein the first device includes a terminal and/or a user plane function entity, wherein the session management function entity is configured to manage the first session of the terminal, and wherein the user plane function entity is configured to transmit the data of the first session;
receiving, by the first device, transmission assistance information from N access network devices, wherein the transmission assistance information of the N access network devices indicates transmission performance of transmission paths corresponding to the N access network devices, and wherein N is a positive integer greater than 1; and wherein the N access network devices are configured to transmit the data of the first session; and
when the first device receives the transmission indication information, determining, by the first device, based on the transmission assistance information, transmission parameters corresponding to the transmission manner of the data of the first session, wherein the transmission parameters corresponding to the split transmission manner indicate split ratios of the data of the first session on the transmission paths corresponding to the N access network devices, wherein the transmission parameters corresponding to the path selection transmission manner indicate a target transmission path of the data of the first session, and wherein the target transmission path is one of the transmission paths corresponding to the N access network devices.

2. The method according to claim 1, wherein the transmission indication information further comprises second transmission indication information, and the second transmission indication information indicates that the transmission parameters corresponding to the transmission manner of the data of the first session are determined based on the transmission assistance information of the N access network devices.

3. The method according to any one of claims 1 to 2, wherein the first session includes at least one data flow, and the at least one data flow includes a first data flow; and wherein the data of the first session includes the first data flow.

4. The method according to any one of claims 1 to 3, wherein the method further comprises:
receiving, by the first device, a split rule from the session management function entity, wherein the split rule indicates a correspondence between transmission assistance information and split ratios; and the determining, by the first device, based on the transmission assistance information, transmission parameters corresponding to the transmission manner of the data of the first session, comprising: determining, by the first device, based on the received transmission assistance information and the split rule, the split ratios of the data of the first session on the transmission paths corresponding to the N access network devices; or
receiving, by the first device, a path selection rule from the session management function entity; and the determining, by the first device, based on the transmission assistance information, transmission parameters corresponding to the transmission manner of the data of the first session, comprising: determining, by the first device, based on the received transmission assistance information and the path selection rule, the target transmission path of the data of the first session.

5. The method according to any one of claims 1 to 4, wherein the determining, by the first device, based on the transmission assistance information, transmission parameters corresponding to the transmission manner of the data of the first session comprises:
determining, by the first device, based on the transmission assistance information of the N access network devices and capability information of the terminal, the transmission parameters corresponding to the transmission manner of the data of the first session; and wherein the capability information of the terminal indicates air interface transmission capability of the terminal on the N access network devices.

6. The method according to claim 5, wherein the first device is the user plane function entity, and the method further comprises:
receiving, by the user plane function entity, the capability information of the terminal from the session management function entity.

7. The method according to any one of claims 1 to 6, wherein the method further comprises:
performing, by the user plane function entity, based on the split ratios indicated by the transmission parameters corresponding to the split transmission manner, split transmission of the data of the first session on downlink transmission paths corresponding to the N access network devices, or performing, based on a target downlink transmission path indicated by the transmission parameters corresponding to the path selection transmission manner, transmission of the data of the first session on the target downlink transmission path; or
performing, by the terminal, based on the split ratios indicated by the transmission parameters corresponding to a first transmission manner, split transmission of the data of the first session on downlink transmission paths corresponding to the N access network devices, or performing, based on a target uplink transmission path indicated by the transmission parameters corresponding to a second transmission manner, transmission of the data of the first session on the target uplink transmission path.

8. The method according to any one of claims 1 to 7, wherein:
the N access network devices comprise N radio access network RAN devices; or
the N access network devices include N non-3rd generation partnership project 3GPP interworking function N3IWF devices; or
the N access network devices include N non-trusted non-3GPP gateway function TNGF devices; or
the N access network devices include at least one RAN device and at least one N3IWF device; or
the N access network devices include at least one RAN device and at least one TNGF device; or
the N access network devices include at least one N3IWF device and at least one TNGF device.

9. The method according to any one of claims 1 to 8, wherein the N access network devices comprise a first access network device, and transmission assistance information of the first access network device comprises one or more of the following information:
signalling status information measured by the first access network device, wherein the signalling status information indicates signalling status between the first access network device and the terminal;
signalling status information received by the first access network device from the terminal, wherein the signalling status information indicates signalling status between the first access network device and the terminal;
load information of the first access network device;
an air interface transmission delay between the first access network device and the terminal;
a transmission rate between the first access network device and the terminal;
transmission reliability information between the first access network device and the terminal.

10. A communication method, wherein the method comprises:
sending, by a session management function entity, reporting indication information to N access network devices, wherein the reporting indication information sent to a first access network device indicates that the first access network device sends transmission assistance information to a first device, wherein the first access network device is one of the N access network devices, wherein the transmission assistance information of the N access network devices indicates transmission performance of transmission paths corresponding to the N access network devices, wherein the first device includes a terminal and/or a user plane function entity, and wherein N is a positive integer greater than 1; and wherein the N access network devices and the user plane function entity are configured to transmit data of a first session; and
sending, by the session management function entity, transmission indication information to the first device, wherein the transmission indication information includes second transmission indication information, wherein the second transmission indication information indicates that the first device determines, based on the transmission assistance information of the N access network devices, transmission parameters corresponding to a transmission manner for the data of the first session, wherein the transmission manner is a split transmission manner or a path selection transmission manner, wherein the transmission parameters corresponding to the split transmission manner indicate split ratios of the data of the first session on the transmission paths corresponding to the N access network devices, wherein the transmission parameters corresponding to the path selection transmission manner indicate a target transmission path of the data of the first session, and wherein the target transmission path is one of the transmission paths corresponding to the N access network devices.

11. The method according to claim 10, wherein the transmission indication information further comprises first transmission indication information, and the first transmission indication information indicates the transmission manner of the data of the first session.

12. The method according to any one of claims 10 to 11, wherein the first session comprises at least one data flow, wherein the at least one data flow comprises a first data flow; and wherein the data of the first session comprises the first data flow.

13. The method according to any one of claims 10 to 12, wherein the method further comprises:
sending, by the session management function entity, a split rule or a transmission path selection rule to the first device, wherein the split rule indicates a correspondence between transmission assistance information and split ratios.

14. The method according to any one of claims 10 to 13, wherein the method further comprises:
sending, by the session management function entity, capability information of the terminal to the user plane function entity, wherein the capability information of the terminal indicates air interface transmission capability of the terminal on the N access network devices.

15. The method according to any one of claims 10 to 14, wherein before the sending, by a session management function entity, reporting indication information to N access network devices, the method further comprises:
determining, by the session management function entity, that the transmission paths corresponding to the N access network devices are associated with the first session of the terminal.

16. The method according to any one of claims 10 to 15, wherein the method further comprises:
sending, by the session management function entity, reporting frequency indication information to the N access network devices, and the reporting frequency indication information indicates a sending frequency of the transmission assistance information.

17. The method according to any one of claims 10 to 16, wherein:
the N access network devices include N radio access network RAN devices; or
the N access network devices include N non-3rd generation partnership project 3GPP interworking function N3IWF devices; or
the N access network devices include N non-trusted non-3GPP gateway function TNGF devices; or
the N access network devices include at least one RAN device and at least one N3IWF device; or
the N access network devices include at least one RAN device and at least one TNGF device; or
the N access network devices include at least one N3IWF device and at least one TNGF device.

18. The method according to any one of claims 10 to 17, wherein the N access network devices include a first access network device, and transmission assistance information of the first access network device comprises one or more of the following information:
signalling status information measured by the first access network device, wherein the signalling status information indicates signalling status between the first access network device and the terminal;
signalling status information received by the first access network device from the terminal, wherein the signalling status information indicates signalling status between the first access network device and the terminal;
load information of the first access network device;
an air interface transmission delay between the first access network device and the terminal;
a transmission rate between the first access network device and the terminal;
transmission reliability information between the first access network device and the terminal.

19. A communication method, wherein the method comprises:
receiving, by a first access network device, reporting indication information from a session management function entity;
sending, by the first access network device, transmission assistance information to the session management function entity or a first device based on the reporting indication information, wherein the transmission assistance information indicates transmission performance of transmission paths corresponding to the first access network device, and wherein the first device includes a terminal and/or a user plane function entity; and
wherein the session management function entity is configured to manage a first session of the terminal, and wherein the first access network device and the user plane function entity are configured to transmit data of the first session.

20. The method according to claim 19, wherein the reporting indication information further indicates that the first access network device sends the transmission assistance information to the session management function entity; or
the reporting indication information further indicates that the first access network device sends the transmission assistance information to the first device.

21. The method according to any one of claims 19 to 20, wherein the method further comprises:
receiving, by the first access network device, reporting frequency indication information from the network function entity; and
the sending, by the first access network device, the transmission assistance information to the session management function entity or the first device based on the reporting indication information comprises:
sending, by the first access network device, the transmission assistance information to the session management function entity or the first device based on reporting frequency indicated by the reporting frequency indication information.

22. The method according to any one of claims 19 to 21, wherein the transmission assistance information comprises one or more of the following information:
signalling status information measured by the first access network device, wherein the signalling status information indicates signalling status between the first access network device and the terminal;
signalling status information of the terminal received by the first access network device, wherein the signalling status information indicates signalling status between the first access network device and the terminal;
load information of the first access network device;
an air interface transmission delay between the first access network device and the terminal;
a transmission rate between the first access network device and the terminal;
transmission reliability information between the first access network device and the terminal.

23. The method according to any one of claims 19 to 22, wherein the first access network device is a radio access network RAN device, or a non-3rd generation partnership project 3GPP interworking function N3IWF device, or a non-3GPP gateway function TNGF device.

24. A communication method, wherein the method comprises:
sending, by a session management function entity, reporting indication information to N access network devices, wherein the reporting indication information indicates that the N access network devices send transmission assistance information to the session management function entity, wherein the transmission assistance information of the N access network devices indicates performance of transmission paths corresponding to the N access network devices, and wherein N is a positive integer greater than 1;
receiving, by the session management function entity, the transmission assistance information from the N access network devices;
determining, by the session management function entity, based on the transmission assistance information, transmission parameters corresponding to a transmission manner of data of a first session of a terminal, wherein the transmission manner is a split transmission manner or a path selection transmission manner, wherein the transmission parameters corresponding to the split transmission manner indicate split ratios of the data of the first session on the transmission paths corresponding to the N access network devices, wherein the transmission parameters corresponding to the path selection transmission manner indicate a target transmission path of the data of the first session, and wherein the target transmission path is one of the transmission paths corresponding to the N access network devices;
sending, by the session management function entity, the transmission parameters to a first device; and
wherein the first device comprises the terminal and/or a user plane function entity, wherein the session management function entity is configured to manage the first session, and wherein the N access network devices and the user plane function entity are configured to transmit the data of the first session.

25. The method according to claim 24, wherein the first session comprises at least one data flow, and the at least one data flow comprises a first data flow; and wherein the data of the first session comprises the first data flow.

26. The method according to any one of claims 24 to 25, wherein the method further comprises:
sending, by the session management function entity, transmission indication information to the first device, wherein the transmission indication information includes third transmission indication information, and the third transmission indication information indicates that the first device transmits the data of the first session based on the transmission parameters.

27. The method according to claim 26, wherein the transmission indication information further comprises fourth transmission indication information, and the fourth transmission indication information indicates the transmission manner of the data of the first session.

28. The method according to any one of claims 24 to 27, wherein the method further comprises:
sending, the session management function entity, reporting frequency indication information to the N access network devices, wherein the reporting frequency indication information indicates a sending frequency of the transmission assistance information.

29. The method according to any one of claims 24 to 28, wherein the determining, by the session management function entity, based on the transmission assistance information, transmission parameters corresponding to a transmission manner of data of a first session of a terminal comprises:
determining, by the session management function entity, based on the transmission assistance information and a split rule, the transmission parameters corresponding to the split transmission manner of the data of the first session; or
determining, by the session management function entity, based on the transmission assistance information and a path selection rule, the transmission parameters corresponding to the path selection transmission manner of the data of the first session.

30. The method according to any one of claims 24 to 28, wherein the determining, by the session management function entity, based on the transmission assistance information, transmission parameters corresponding to a transmission manner of data of a first session of a terminal comprises:
determining, by the session management function entity, based on the transmission assistance information and capability information of the terminal, the transmission parameters corresponding to the transmission manner of the data of the first session, wherein the capability information of the terminal indicates air interface transmission capability of the terminal on the N access network devices.

31. The method according to claim 30, wherein the method further comprises:
receiving, by the session management function entity, the capability information from the terminal.

32. The method according to any one of claims 24 to 31, wherein before the sending, by a session management function entity, reporting indication information to N access network devices, the method further comprises:
determining, by the session management function entity, that the transmission paths corresponding to the N access network devices are associated with the first session of the terminal.

33. A communication method, wherein the method comprises:
receiving, by a first device, from a session management function entity, transmission parameters corresponding to a transmission manner, wherein the transmission manner is a split transmission manner or a path selection transmission manner, wherein the transmission parameters corresponding to the split transmission manner indicate split ratios of data of a first session on transmission paths corresponding to N access network devices, wherein the transmission parameters corresponding to the path selection transmission manner indicate a target transmission path of the data of the first session, wherein the target transmission path is one of the transmission paths corresponding to the N access network devices, wherein the transmission parameters are determined based on transmission assistance information of the N access network devices, wherein the transmission assistance information of the N access network devices indicates transmission performance of the transmission paths corresponding to the N access network devices, wherein the first device includes a terminal and/or a user plane function entity, and wherein N is a positive integer; and wherein the session management function entity is configured to manage the first session of the terminal, and wherein the N access network devices and the user plane function entity are configured to transmit the data of the first session; and
transimiting, by the first device, the data of the first session based on the transmission parameters.

34. The method according to claim 33, wherein the method further comprises:
receving, by the first device, transmission indication information from the session management function entity, wherein the transmission indication information includes third transmission indication information, and wherein the third transmission indication information indicates that the first device transmits the data of the first session based on the transmission parameters.

35. The method according to claim 34, wherein the transmission indication information further includes fourth transmission indication information, and wherein the fourth transmission indication information indicates a transmission method of the data of the first session.

36. The method according to any one of claims 33 to 35, wherein the first session includes at least one data flow, the at least one data flow includes a first data flow; and wherein the data of the first session includes the first data flow.

37. The method according to any one of claims 33 to 36, wherein the transmitting, by the first device, the data of the first session based on the transmission parameters comprises:
performing, by the user plane function entity, based on the split ratios indicated by the transmission parameters corresponding to a first transmission manner, split transmission of the data of the first session on downlink transmission paths corresponding to the N access network devices, or, perfroming, based on a target downlink transmission path indicated by the transmission parameters corresponding to a second transmission manner, transmission of the data of the first session on the target downlink transmission path; or
performing, by the terminal, based on the split ratios indicated by the transmission parameters corresponding to a first transmission manner, split transmission of the data of the first session on downlink transmission paths corresponding to the N access network devices, or performing, based on a target uplink transmission path indicated by the transmission parameters corresponding to a second transmission manner, transmission of the data of the first session on the target uplink transmission path.

38. A communication apparatus, wherein the apparatus comprises a unit or module configured to perform the method according to any one of claims 1 to 9, or includes a unit or module configured to perform the method according to any one of claims 10 to 18, or includes a unit or module configured to perform the method according to any one of claims 19 to 23, or includes a unit or module configured to perform the method according to any one of claims 24 to 32, or includes a unit or module configured to perform the method according to any one of claims 33 to 37.

39. A communication apparatus, wherein the apparatus comprises: one or more processors configured to perform the method according to any one of claims 1 to 9, or perform the method according to any one of claims 10 to 18, or perform the method according to any one of claims 19 to 23, or perform the method according to any one of claims 24 to 32, or perform the method according to any one of claims 33 to 37.

40. A communication system, wherein the communication system comprises: a first device that implements the method according to any one of claims 1 to 9, a session management function entity that implements the method according to any one of claims 10 to 18, and a first access network device that implements the method according to any one of claims 19 to 23; or the communication system comprises a session management function entity that implements the method according to any one of claims 24 to 32, and a first device that implements the method according to any one of claims 33 to 37.

41. A computer-readable storage medium, wherein the computer-readable storage medium stores a computer program or instructions, and when the computer program or instructions are executed by a communication apparatus, the method according to any one of claims 1 to 9 is implemented, or the method according to any one of claims 10 to 18 is implemented, or the method according to any one of claims 19 to 23 is implemented, or the method according to any one of claims 24 to 32 is implemented, or the method according to any one of claims 33 to 37 is implemented.

42. A chip system, wherein the chip system comprises: a memory, configured to store a computer program; a processor; wherein after the processor invokes and runs the computer program from the memory, a communication apparatus that has the chip system installed is enabled to perform the method according to any one of claims 1 to 9, or perform the method according to any one of claims 10 to 18, or perform the method according to any one of claims 19 to 23, or perform the method according to any one of claims 24 to 32, or perform the method according to any one of claims 33 to 37.

43. A computer program product, wherein when the computer program product is invoked by a computer, the computer is enabled to perform the method according to any one of claims 1 to 9, or perform the method according to any one of claims 10 to 18, or perform the method according to any one of claims 19 to 23, or perform the method according to any one of claims 24 to 32, or perform the method according to any one of claims 33 to 37.
